# EUROPEAN PATENT SPECIFICATION

(11) **EP 3 968 550 B1**
(45) Date of publication and mention of the grant of the patent: **22.01.2025**
(21) Application number: 20813458.5
(22) Date of filing: 25.05.2020
(51) Int. Cl.: H04L 1/00, H04L 1/18, H04L 1/16

(54) **RETRANSMISSION DATA SENDING METHOD, RETRANSMISSION DATA RECEIVING METHOD, AND DEVICE**
VERFAHREN UND VORRICHTUNG ZUM SENDEN UND EMPFANGEN VON WEITERLEITUNGSDATEN
PROCÉDÉ D'ENVOI DE DONNÉES DE RETRANSMISSION, PROCÉDÉ DE RÉCEPTION DE DONNÉES DE RETRANSMISSION, ET DISPOSITIF

(30) Priority: 25.05.2019 CN 201910442763
(43) Date of publication of application: 16.03.2022
(73) Proprietor: Huawei Technologies Co., Ltd., Shenzhen, Guangdong 518129 (CN)
(72) Inventor: GAN, Ming, Shenzhen, Guangdong 518129 (CN); LIN, Wei, Shenzhen, Guangdong 518129 (CN); LIANG, Dandan, Shenzhen, Guangdong 518129 (CN); YANG, Xun, Shenzhen, Guangdong 518129 (CN)
(74) Representative: Maiwald GmbH
(86) International application number: PCT/CN2020/092073
(87) International publication number: WO 2020/238845

(56) References cited:
- WO-A1-2010/111628
- CN-A- 106 576 020
- CN-A- 106 879 026
- US-A1- 2012 110 405
- US-B1- 9 876 614
- 3RD GENERATION PARTNERSHIP PROJECT: "Technical Specification Group Radio Access Network; Study on NR-based Access to Unlicensed Spectrum; (Release 16)", 3GPP TR 38.889 V1.1.0, 31 December 2018 (2018-12-31), pages 1 - 119, XP051591316

## Description

### TECHNICAL FIELD

This application relates to the field of communications technologies, and in particular, to a retransmitted data sending method, a retransmitted data receiving method, and apparatuses.

### BACKGROUND

In a communications system, signal transmission may fail due to a time-varying characteristic and multipath fading of a wireless channel. Methods such as a forward error correction (FEC, forward error correction) coding technology and automatic repeat request (ARQ, automatic repeat request) are usually used for error control. For example, in a WLAN (wireless local area network, wireless local area network), when an access point (access point, AP) sends data to a station (station, STA), if the STA successfully receives the data, the STA feeds back an acknowledgment (acknowledgment, ACK) frame to the AP; or if the STA fails to receive the data, the STA does not feed back any frame. If the AP does not receive any feedback, it retransmits the sent data for error control.

Based on ARQ, hybrid ARQ (HARQ, hybrid automatic repeat request) is further introduced into standards such as LTE (Long Term Evolution, Long Term Evolution). When a receive end prestores data received for the first time, and then receives retransmitted data, the receive end combines the data received for the first time and the data received in the retransmission, so as to increase a decoding success rate. Because HARQ can further increase a success rate of receiving retransmitted data, a HARQ mechanism is usually used in a deep fading area or an edge area in a wireless network. The mechanism can usually enable a transmit end to use a higher modulation and coding scheme (modulation and coding scheme, MCS) to improve transmission efficiency.

Because retransmission requires a cache of a specific size to store data that needs to be combined, no retransmission mechanism is introduced into previous standards such as 802.11a/g/n/ac/ax. In a future WLAN system such as a next-generation WLAN system, namely, an 802.11be system, due to improved hardware performance, a retransmission technology that can improve transmission reliability and efficiency is likely to be selected as one of technologies for a next-generation Wi-Fi standard. Therefore, how to design HARQ adaptive to a WLAN system is critical.

Document US 9 876 614 B1 describes a method for transmission of MAC protocol data units (MPDUs) over a wireless local area network (WLAN) communication channel. A first physical layer (PHY) data unit has i) a data field that includes a first MPDU to be transmitted to a second communication device, and ii) a PHY signal field that includes a transmission version field set to indicate an initial transmission of the first MPDU. The first PHY data unit is transmitted over the WLAN communication channel to the second communication device. It is determined, at the first communication device, whether a first acknowledgment to the first MPDU has been received from the second communication device. In response to determining that the first acknowledgment has not been received, a second PHY data unit is generated at the first communication device. The second PHY data unit has i) a data field that includes the first MPDU, and ii) a PHY signal field that includes a transmission version field set to indicate a retransmission of the first MPDU.

Document WO 2010/111628 A1 describes a method of transmitting a data frame. It may include transmitting a preamble, transmitting a physical layer convergence protocol (PLCP) header, and transmitting a plurality of MPDUs.

### SUMMARY

The present invention is defined in the independent claims. The despendent claims define the advantageous embodiments thereof.

In the technical solutions of this application, MPDU retransmission based on an A-MPDU structure is implemented, and WLAN retransmission can be supported, thereby further improving transmission reliability and transmission efficiency of a WLAN system. In addition, the receive end is enabled to directly perform combined decoding or joint decoding on the LLRs of the retransmitted coded bits and the LLRs of the priorly transmitted coded bits, thereby reducing complexity of the receive end, reducing a decoding time of the receive end, and improving transmission efficiency.

### BRIEF DESCRIPTION OF DRAWINGS

FIG. 1 is a schematic diagram of an application scenario according to an embodiment of this application;
FIG. 2 is a schematic diagram of a frame structure of an A-MPDU according to an embodiment of this application;
FIG. 3 is a schematic flowchart of a retransmitted data exchange method according to an embodiment of this application;
FIG. 4 is a schematic diagram of information bits and coded bits of an A-MPDU according to an embodiment of this application;
FIG. 5 is a schematic flowchart of a retransmitted data sending method according to an embodiment of this application;
FIG. 6a is a schematic diagram of a structure of a first A-MPDU according to an embodiment of this application;
FIG. 6b is a schematic diagram of a structure of a second A-MPDU according to an embodiment of this application;
FIG. 6c is a schematic diagram of a structure of another second A-MPDU according to an embodiment of this application;
FIG. 6d is a schematic diagram of a structure of still another second A-MPDU according to an embodiment of this application;
FIG. 7a is a schematic diagram of a structure of another first A-MPDU according to an embodiment of this application;
FIG. 7b is a schematic diagram of a structure of yet another second A-MPDU according to an embodiment of this application;
FIG. 7c is a schematic diagram of a structure of still yet another second A-MPDU according to an embodiment of this application;
FIG. 7d is a schematic diagram of a structure of a further second A-MPDU according to an embodiment of this application;
FIG. 8 is a schematic flowchart of a retransmitted data receiving method according to an embodiment of this application;
FIG. 9 is a schematic flowchart of another retransmitted data sending method according to an embodiment of this application;
FIG. 10 is a schematic flowchart of another retransmitted data receiving method according to an embodiment of this application;
FIG. 11 is a schematic flowchart of still another retransmitted data sending method according to an embodiment of this application;
FIG. 12a is a schematic diagram of a structure of still another first A-MPDU according to an embodiment of this application;
FIG. 12b is a schematic diagram of a structure of a still further second A-MPDU according to an embodiment of this application;
FIG. 12c is a schematic diagram of a structure of a yet further second A-MPDU according to an embodiment of this application;
FIG. 12d is a schematic diagram of a structure of a still yet further second A-MPDU according to an embodiment of this application;
FIG. 13 is a schematic flowchart of still another retransmitted data receiving method according to an embodiment of this application;
FIG. 14 is a schematic flowchart of yet another retransmitted data sending method according to an embodiment of this application;
FIG. 15 is a schematic flowchart of yet another retransmitted data receiving method according to an embodiment of this application;
FIG. 16 is a schematic diagram of a structure of a sending apparatus according to an embodiment of this application;
FIG. 17 is a schematic diagram of a structure of a receiving apparatus according to an embodiment of this application;
FIG. 18 is a schematic diagram of a structure of another sending apparatus according to an embodiment of this application; and
FIG. 19 is a schematic diagram of a structure of another receiving apparatus according to an embodiment of this application.

### DESCRIPTION OF EMBODIMENTS

To make the objectives, technical solutions, and advantages of this application clearer, the following further describes implementations of this application in detail with reference to the accompanying drawings.

In a wireless communications system, signal transmission may fail due to a time-varying characteristic and multipath fading of a wireless channel. Therefore, methods such as a forward error correction (FEC, forward error correction) coding technology and automatic repeat request (ARQ, automatic repeat request) are usually used for error control.

In a retransmission technology, a transmit end retransmits data that is unsuccessfully or correctly received by a receive end priorly. The retransmission technology may include ARQ and HARQ. Compared with ARQ, HARQ can further increase a success rate of receiving retransmitted data. A HARQ technology in LTE generally includes two implementations: chase combining (chase combining, CC) and incremental redundancy (incremental redundancy, IR).

Chase combining is also referred to as soft combining. In a CC-type retransmission process, the transmit end retransmits coded bits that are the same as priorly incorrectly transmitted coded bits, where the retransmitted coded bits include information bits and check bits. The receive end combines the retransmitted coded bits with the priorly transmitted coded bits that are priorly received. Herein, LLRs (log-likelihood ratios, log-likelihood ratios) of previously incorrectly transmitted coded bits are combined with LLRs of currently received coded bits, and then the combined LLR values are decoded.

In an incremental redundancy retransmission process, a transmit party retransmits retransmitted coded bits. The retransmitted coded bits are different from priorly transmitted coded bits. For example, the transmit party retransmits additional check bits or retransmits newly generated check bits. Alternatively, the transmit party retransmits some of information bits and check bits, or retransmits another part of a coded code word. The retransmitted coded bits may have different redundancy versions (redundant versions). A receive end performs joint decoding on original information and information of additionally received retransmitted coded bits. Because a quantity of bits retransmitted through HARQ IR is smaller, HARQ IR has higher efficiency than HARQ CC, but is more complex because a coding codebook needs to be redesigned.

In a wireless communications system, for example, in a cellular communications system supporting LTE or 5G, a transmit end sends a single data packet. The single data packet includes only one data subpacket, instead of aggregating a plurality of data subpackets. If the data packet is incorrectly sent, incorrectly received, or unsuccessfully received, the transmit end first encodes the data packet to be retransmitted; scrambles coded bits; performs constellation point mapping and modulation, carrier signal multiplication, and the like after the scrambling; and finally sends the data packet to a receive end by using a transmit antenna. After receiving a signal, the receive end correspondingly performs constellation point demapping and descrambling sequentially, and performs combined decoding or joint decoding on an LLR of each descrambled coded bit and an LLR of each previously received coded bit, so as to obtain the information bits in the data packet through decoding. When a data packet aggregates a plurality of data subpackets or a data frame aggregates a plurality of data subframes, how to retransmit some of the plurality of data subframes to improve transmission reliability and transmission efficiency is still an unsolved technical problem. Therefore, the embodiments of this application provide a retransmitted data sending method, a retransmitted data receiving method, and apparatuses. In this way, a receive end can perform combined decoding and joint decoding on LLRs of retransmitted coded bits and LLRs of priorly transmitted coded bits to improve retransmission efficiency. This improves transmission efficiency and reliability of a wireless communications system.

It should be noted that, the solutions in the embodiments of this application are applicable to a plurality of types of wireless communications systems, for example, a cellular communications system and a wireless local area network (WLAN) communications system. The cellular communications system may support a plurality of communications protocols, for example, a 5G NR communications protocol and a future cellular communications protocol. The WLAN communications system may also support a plurality of WLAN communication protocols, such as the Institute of Electrical and Electronics Engineers (Institute of Electrical and Electronics Engineers, IEEE) 802.11ax protocol, and a next-generation protocol and a further next-generation protocol of the IEEE 802.11ax protocol.

The solutions in the embodiments of this application may be applied to communication between a transmit end and a receive end in the foregoing communications systems. The transmit end and the receive end may be wireless communications apparatuses or chips that support wireless communication, for example, may be a base station and a terminal in a cellular communications system or chips in the base station and the terminal, or may be an access point and a station in a WLAN communications system or chips in the access point and the station. For example, the terminal and the station each may also be referred to as a user terminal, a user apparatus, an access apparatus, a subscriber station, a subscriber unit, a mobile station, a user agent, user equipment, or another name. The user terminal may include various handheld devices, in-vehicle devices, wearable devices, computing devices, or other processing devices connected to a wireless modem that have a wireless communication function, and user equipment (user equipment, UE for short) in various forms, mobile stations (mobile stations, MSs for short), terminals (terminals), terminal equipment (terminal equipment), portable communications devices, handheld machines, portable computing devices, entertainment devices, game devices or systems, Global Positioning System devices, or any other suitable devices configured to perform network communication through a wireless medium, and the like. The base station or the access point may further include various forms of macro base stations, micro base stations, relay stations, wireless access points, and the like.

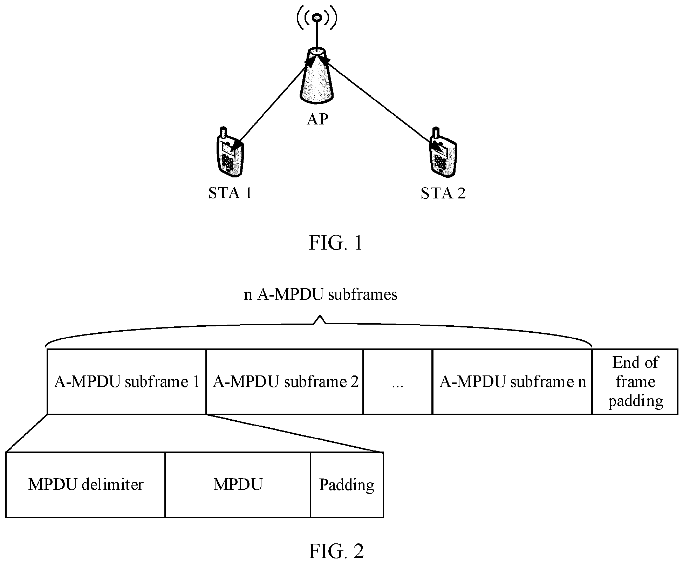

For ease of description, a WLAN is used as an example for description in the embodiments of this application. The WLAN may include a plurality of basic service sets (basic service sets, BSSs). A basic service set shown in FIG. 1 includes an access point (access point, AP) station and a non-access point station (non-access point station, non-AP STA). The access point station is usually referred to as an access point for short, that is, an AP, and a non-access point station is usually referred to as a station for short, that is, a STA. Each basic service set may include one AP and a plurality of STAs associated with the AP. The access point is an apparatus having a wireless transceiver function, and may provide a service for the station. The station is an apparatus having a wireless transceiver function, and may access a wireless local area network based on the access point. Therefore, in this application scenario, the transmit end may be an access point or a station, and the receive end may also be an access point or a station. In other words, the methods in the embodiments of this application may be applied to communication between access points, communication between an access point and a station, or communication between stations.

In a WLAN, data, control signaling, management signaling, or the like is transferred between an AP and a STA by using a Media Access Control protocol data unit (MAC protocol data unit, MPDU). The MPDU generally includes a frame header, a frame body (frame body), and a frame check sequence (frame check sequence, FCS). The frame body is used to carry data, management information, or control information, where the data, the management information, or the control information is transmitted from an upper layer. For some specific types of MPDUs, for example, an acknowledgment frame, the frame body may not exist. The FCS is used to check whether the MPDU is correctly transmitted. The frame header may include at least one of the following fields: a frame control (frame control) field, a duration or identifier (duration/ID) field, an address information field, a sequence control (sequence control) field, a quality of service control (quality of service control, QoS control) field, and a high throughput control (high throughput control, HT control) field. For explanations of the fields, refer to the IEEE 802.11 protocol. Details are not described herein in the embodiments of this application.

To improve WLAN performance, currently, a frame aggregation technology is used at a MAC layer to aggregate a plurality of MPDUs into one aggregated MPDU (aggregated MPDU, A-MPDU). The A-MPDU aggregates a plurality of MPDUs and is transmitted by using one unified physical preamble. This effectively reduces overheads caused by channel contention and the physical preamble, and improves transmission efficiency. FIG. 2 is a schematic diagram of a structure of an A-MPDU in the IEEE 802.11 standard. As shown in FIG. 2, the A-MPDU includes n A-MPDU subframes, where n is an integer greater than 1. Optionally, referring to FIG. 2, the A-MPDU may further include an end of frame (end of frame, EOF) padding (padding) field located after the n A-MPDU subframes. Each A-MPDU subframe includes an MPDU delimiter (delimiter) and an MPDU. Optionally, the A-MPDU subframe may further include a padding field. The MPDU delimiter is used to separate a plurality of aggregated MPDUs.

Optionally, the MPDU delimiter includes at least one of the following fields: an EOF field, a reserved (reserved) bit field, an MPDU length (MPDU length) field, a cyclic redundancy code (cyclic redundancy code, CRC) field, and a delimiter signature (delimiter signature) field. Content included in the MPDU delimiter and a sorting order of the fields both are not limited in the embodiments of this application.

Specially, for an A-MPDU that includes only one delimiter and one MPDU, an EOF field in the MPDU delimiter is set to 1, and the A-MPDU is also referred to as a single MPDU (S-MPDU, single Media Access Control protocol data unit). For an MPDU and an S-MPDU, the 802.11 standard uses a mechanism in which a reply is provided by using a simple acknowledgment (ACK) frame, and indicates, based on whether an acknowledgment frame is sent, whether the MPDU or the S-MPDU is successfully received. For an A-MPDU that includes at least two MPDUs, a reply is provided by using a block acknowledgment (block ACK) frame (including variants of the block acknowledgment frame, such as a basic block acknowledgment frame, a compressed block acknowledgment frame, a multi-Traffic IDentifier block acknowledgment frame, a multi-STA block acknowledgment (multi-STA block ACK) frame, and the like). The foregoing block acknowledgment frame includes a bitmap. One bit in the bitmap corresponds to one MPDU, and is used to indicate whether the corresponding MPDU in the A-MPDU is correctly received, where 1 indicates that the corresponding MPDU is correctly received, and 0 indicates that the corresponding MPDU is incorrectly received. If each MPDU in the aggregated frame A-MPDU is not correctly received or is not received, a STA does not feed back acknowledgment information.

For ease of understanding, a general process of data sending and data receiving is first described in the embodiments of this application. Due to different orders of scrambling and decoding, the process of data sending and data receiving may cover two cases: In a first process, encoding is performed before scrambling. In a second process, scrambling is performed before encoding.

In an implementation of the first process, a transmit end generates a Media Access Control (Media Access Control, MAC) frame at a MAC layer, for example, an A-MPDU frame. The MAC frame includes a plurality of information bits, and the MAC frame is transferred to a physical layer (physical layer, PHY). At the PHY layer, a physical preamble is added to the MAC frame, and the MAC frame is encapsulated into a physical protocol data unit (PHY protocol data unit, PPDU) or a physical layer data packet. The PPDU is transmitted by an antenna after undergoing processing such as encoding, scrambling, and constellation point mapping. Correspondingly, after receiving a signal, a receive end performs processing such as constellation point demapping, descrambling, and decoding sequentially at the PHY layer to obtain the PHY layer PPDU, and decapsulates the PPDU to obtain the MAC frame, so as to obtain the information bits.

In an implementation of the second process, a transmit end generates a Media Access Control (Media Access Control, MAC) frame at a MAC layer, for example, an A-MPDU frame. The MAC frame includes a plurality of information bits. At a PHY layer, the MAC frame may be encapsulated into a PPDU, and then the PPDU may undergo processing such as scrambling and encoding sequentially and be transmitted by an antenna. Correspondingly, a receive end first decodes a received signal, descrambles the received signal to obtain the PHY layer data unit, and then decapsulates the PHY layer data unit to obtain the MAC frame.

It should be noted that, the transmit end and the receive end may further include other baseband processing, radio frequency processing, and the like. Details are not described in the embodiments of this application. In the process of data sending and data receiving, a plurality of encoding and decoding types may be used. For ease of description, in the embodiments of this application, a binary convolutional code (binary convolutional code, BCC) is used as an example for description. The convolutional code is a type of channel coding (channel coding) technology, and is a type of error-correcting code (error-correcting code) in the telecommunications field. Compared with a block code, the convolutional code maintains a memory property (memory property) of a channel. A convolutional code encoder is essentially finite-state linear shift registers. The linear shift registers store information bits that are input, and the registers are connected to an algebraic operation unit based on a specific rule. In this way, the information bits are sequentially input into the registers, and the operation unit performs an algebraic operation by receiving these information bits input into the registers, and outputs an operation result as coded bits. In the embodiments of this application, initial input values in the registers of the convolutional code encoder are referred to as initial states, and end input values in the registers of the convolutional code encoder are referred to as end states. Currently, one of encoding manners used by Wi-Fi is BCC encoding. Initial states of the BCC encoder are 6 bits of all 0s, and end states of the BCC encoder are 6 all-0 padded tail bits (tail bits) for ending. There are code rates of 1/2, 2/3, 3/4, and 5/6. BCC code generator polynomials at the code rate of 1/2 are g₀ =133₈ and g₁ =171₈. Coded bits at the other code rates of 2/3, 3/4, and 5/6 are generated by periodically puncturing BCC coded bits at the code rate 1/2. Each coded bit output by the BCC encoder is related to 6 state values stored in 6 registers and 1-bit information input at this time. Each time the BCC encoder outputs one coded bit, the 6 states stored in the 6 registers are shifted rightwards, a leftmost state is replaced by the 1-bit information input at this time, and a rightmost state is removed and no longer exists.

Since 802.11n of Wi-Fi, data packet transmission has evolved to a method for transmitting an A-MPDU that aggregates a plurality of MPDUs, so as to improve efficiency. The physical layer does not identify each A-MPDU subframe in the A-MPDU. Instead, the physical layer treats the entire A-MPDU as a whole, adds 6 all-0 padding bits after the A-MPDU, and then performs BCC channel coding. For ease of description, in the embodiments of this application, a first A-MPDU is denoted as a prior-transmission A-MPDU, and a second A-MPDU is denoted as a retransmission A-MPDU. The first A-MPDU includes M A-MPDU subframes. After the first A-MPDU is sent, it is determined by using received acknowledgment information that N A-MPDU subframes in the first A-MPDU include N MPDUs that need to be retransmitted. The N MPDUs are referred to as N retransmission MPDUs. The second A-MPDU includes the N A-MPDU subframes. Optionally, the second A-MPDU may further include another MPDU, which is a non-retransmission MPDU. A scrambling sequence used for priorly transmitting an MPDU is referred to as a prior-transmission scrambling sequence, encoding parameters used for the prior transmission are referred to as prior-transmission encoding parameters, and coded bits corresponding to N A-MPDU subframes in the prior transmission are referred to as priorly transmitted coded bits. A scrambling sequence used for retransmitting N MPDUs is referred to as a retransmission scrambling sequence, parameters used for retransmitting the N MPDUs are referred to as retransmission encoding parameters, and coded bits corresponding to N A-MPDU subframes in the retransmission are referred to as retransmitted coded bits. The first A-MPDU is carried in a data field of a first PPDU, and the second A-MPDU is carried in a data field of a second PPDU. The prior transmission may be previous transmission of the retransmission or the first transmission. A retransmission MPDU includes a single retransmission MPDU and/or at least two consecutive to-be-retransmitted MPDUs. The single retransmission MPDU may be denoted as a first-type retransmission MPDU, and the at least two consecutive to-be-retransmitted MPDUs may be denoted as second-type retransmission MPDUs. The solutions in the embodiments of this application are applicable to not only a case in which a plurality of MPDUs need to be retransmitted, but also a case in which one MPDU needs to be retransmitted. It should be noted that, herein, a retransmission MPDU is used by the receive end to perform a HARQ operation. If a retransmission MPDU is only used to perform an ARQ operation, the retransmission MPDU falls beyond a scope of the retransmission MPDU herein.

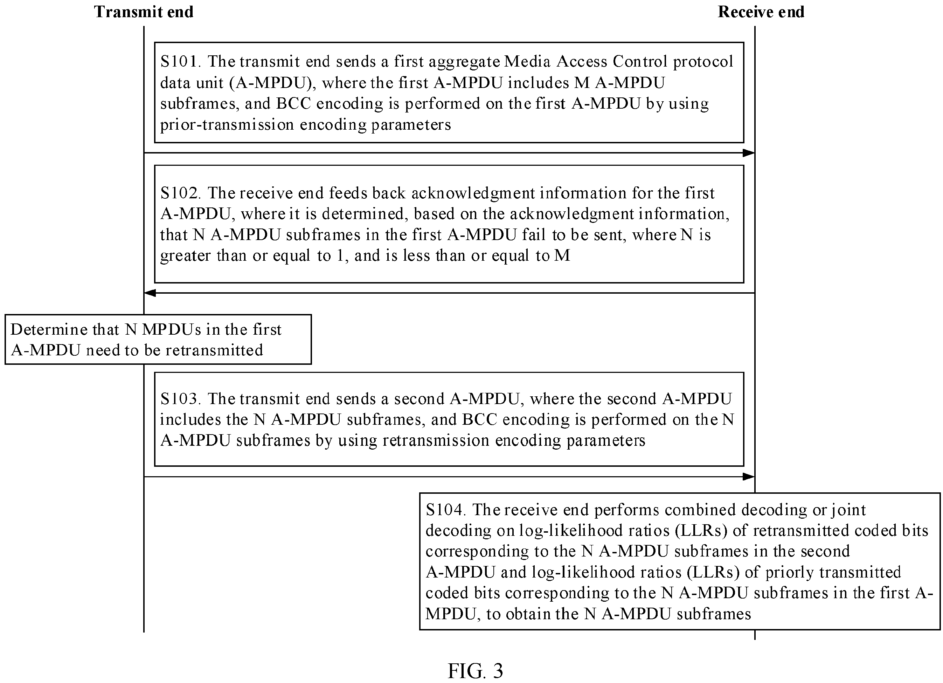

Embodiment 1: FIG. 3 is a schematic flowchart of a retransmitted data exchange method according to an embodiment of this application. An exchange process includes the following steps.

S 101. A transmit end sends a first aggregate Media Access Control protocol data unit (A-MPDU), where the first A-MPDU includes M A-MPDU subframes, and BCC encoding is used for the first A-MPDU.

S102. Receive acknowledgment information fed back by a receive end for the first A-MPDU, and determine, based on the acknowledgment information, that N A-MPDU subframes in the first A-MPDU fail to be sent, where N is greater than or equal to 1, and is less than or equal to M.

The transmit end determines that N MPDUs included in the N A-MPDU subframes in the first A-MPDU need to be retransmitted, and the N MPDUs are referred to as N retransmission MPDUs. Optionally, the M A-MPDU subframes may further include another A-MPDU subframe, and an MPDU in the another A-MPDU subframe does not need to be retransmitted.

The transmit end may determine, in a plurality of manners, which MPDU in the priorly transmitted A-MPDU needs to be retransmitted. For example, which priorly transmitted MPDU needs to be retransmitted may be determined based on the acknowledgment information sent by the receive end, or with reference to a service requirement of the transmit end, or based on the acknowledgment information sent by the receive end and an actual status of the transmit end.

In a manner, the transmit end determines, based on the acknowledgment information fed back by the receive end, which MPDU needs to be retransmitted. Therefore, optionally, the acknowledgment information fed back by the receive end is used to indicate, to the transmit end, which MPDU in the priorly transmitted A-MPDU is successfully received. For example, the receive end may notify, by using negative acknowledgment (NACK) information, a bitmap in a block acknowledgment (block ACK) frame, or a bitmap in a multi-STA block acknowledgment (multi-STA block ACK) frame, the transmit end which MPDU is unsuccessfully received or fails to be received.

Optionally, the MPDU that needs to be retransmitted may be an MPDU that is unsuccessfully received (fails to be received) by the receive end in the prior transmission. An MPDU that does not need to be retransmitted may be an MPDU that is successfully received (successful receiving) by the receive end in the prior transmission or an MPDU that is not correctly received but no longer needs to be retransmitted, for example, an MPDU whose expiration time arrives.

S103. The transmit end sends a second A-MPDU, where the second A-MPDU includes the N A-MPDU subframes, and BCC encoding is performed on the N A-MPDU subframes by using retransmission encoding parameters.

For ease of description, encoding parameters used for the first A-MPDU are referred to as prior-transmission encoding parameters, where the retransmission encoding parameters and the prior-transmission encoding parameters are the same or are in a preset relationship. N initial states of the BCC encoding performed for retransmitting the N A-MPDU subframes are respectively the same as N initial states of BCC encoding performed for priorly transmitting the N A-MPDU subframes.

Optionally, N end states of the BCC encoding performed for retransmitting the N A-MPDU subframes are respectively the same as N end states of the BCC encoding performed for priorly transmitting the N A-MPDU subframes. The initial states are initial input values of BCC encoding registers, and the end states are end input values of the BCC encoding registers.

Optionally, the second A-MPDU may further include a new-transmission MPDU (a non-retransmission MPDU). Encoding parameters used for encoding an A-MPDU subframe corresponding to the new-transmission MPDU may be the same as or different from the retransmission encoding parameters. A periodic scrambling sequence used for the new transmission may be the same as or different from a periodic scrambling sequence used for the retransmission. This is not limited in this embodiment of this application. Optionally, an order of the N A-MPDU subframes in the second A-MPDU is the same as an order of the N A-MPDU subframes in the first A-MPDU subframe. The N A-MPDU subframes may be located at a preset location in the second A-MPDU, for example, located at a start location, a middle location, or an end location. The preset location may be stipulated by a protocol, specified by an AP, or determined by negotiation between an AP and a STA. Because an A-MPDU may include one or more of a management frame, a control frame, and a data frame, if only the data frame supports HARQ transmission, a retransmission MPDU only needs to be placed at a preset location in each data frame or before all other A-MPDU subframes, for example, a start location, a middle location, or an end location. The preset location may be stipulated by a protocol, specified by an AP, or determined by negotiation between an AP and a STA. In another implementation, an A-MPDU subframe corresponding to a retransmission MPDU is placed after an existing PPDU preamble and before a service field. Optionally, the PPDU further includes a physical layer padding bit and a packet extension field.

In retransmission, initial states of BCC encoding performed on a retransmission A-MPDU subframe, that is, initial input values of encoding registers for BCC encoding performed on the retransmission A-MPDU subframe, are referred to as retransmission initial states; and end states of the BCC encoding performed on the retransmission A-MPDU subframe, that is, end input values of the encoding registers for the BCC encoding performed on the retransmission A-MPDU subframe, are referred to as retransmission end states.

When the N A-MPDU subframes are retransmitted, for each A-MPDU subframe, retransmission initial states are the same as prior-transmission initial states, and retransmission encoding parameters and prior-transmission encoding parameters are the same or are in a preset relationship. In this way, the receive end can perform combined decoding or joint decoding on LLRs of priorly transmitted coded bits and LLRs of retransmitted coded bits. This reduces complexity of the receive end, reduces a decoding time of the receive end, improves retransmission efficiency, and implements support for HARQ transmission of an A-MPDU structure in a WLAN.

Optionally, the encoding parameters (the retransmission encoding parameters and the prior-transmission encoding parameters) include a code rate and a generator polynomial matrix corresponding to the code rate, and optionally further include a puncturing mode. That the retransmission encoding parameters and the prior-transmission encoding parameters are the same may be as follows: The code rates are the same, and the generator polynomial matrices respectively corresponding to the code rates are the same. Optionally, if the encoding parameters include a puncturing mode, a puncturing mode for the retransmission is also the same as that for the prior transmission. That the retransmission encoding parameters and the prior-transmission encoding parameters are in a preset relationship may be as follows: The code rates are the same, and the generator polynomial matrices respectively corresponding to the code rates are the same. If the encoding parameters include a puncturing mode, a retransmission puncturing mode and a prior-transmission puncturing mode are in a preset relationship. Coded bits obtained in the retransmission puncturing mode and coded bits obtained in the prior-transmission puncturing mode may be combined into coded bits obtained in a new puncturing mode.

The retransmission MPDUs may be consecutive MPDUs, or may be non-consecutive MPDUs. Therefore, the N retransmission MPDUs may include at least one of the following:
First-type retransmission MPDU: which is a single retransmission MPDU. This single retransmission MPDU is not adjacent to or consecutive with any other retransmission MPDU in the first A-MPDU subframe.
Second-type retransmission MPDUs: which are at least two consecutive retransmission MPDUs. The at least two consecutive retransmission MPDUs refer to adjacent retransmission MPDUs in the first A-MPDU or retransmission MPDUs that have adjacent sequence numbers (sequence numbers) in the first A-MPDU. For example, the first A-MPDU successively includes MPDU 1, MPDU 2, MPDU 3, MPDU 4, and MPDU 5, and MPDU 2 and MPDU 3 are adjacent to each other. In this case, MPDU 2 and MPDU 3 may be referred to as consecutive MPDUs. If MPDU 2 and MPDU 3 are unsuccessfully received by the receive end or are incorrectly transmitted and need to be retransmitted, and other MPDUs are correctly received and do not need to be retransmitted, MPDU 2 and MPDU 3 may be referred to as consecutive to-be-retransmitted MPDUs.

It may be understood that, the N retransmission MPDUs may include at least one of the foregoing two types of retransmission MPDUs, and certainly may further include a plurality of first-type retransmission MPDUs and/or a plurality of second-type retransmission MPDUs. For example, the N retransmission MPDUs are at least one single first MPDU and at least two consecutive first MPDUs. For example, the first A-MPDU successively includes MPDU 1, MPDU 2, MPDU 3, MPDU 4, and MPDU 5, and MPDU 2 and MPDU 3 are adjacent to each other. In this case, MPDU 2 and MPDU 3 may be referred to as consecutive MPDUs. If MPDU 2 and MPDU 3 are unsuccessfully received by the receive end or are incorrectly transmitted and need to be retransmitted, MPDU5 is non-consecutive with MPDU2 and MPDU3 and is unsuccessfully received, and MPDU1 and MPDU4 are correctly received and do not need to be retransmitted, MPDU 2 and MPDU 3 may be referred to as consecutive retransmission MPDUs (the second-type retransmission MPDUs), and MPDU 5 is a single retransmission MPDU (the first-type retransmission MPDU).

In this embodiment of this application, a manner in which N retransmission initial states are made the same as N prior-transmission initial states includes but is not limited to the following several manners:
In a first implementation, the M A-MPDU subframes of the first A-MPDU correspond to M tail bit parts. Each tail bit part includes at least 6 bits, and the at least 6 bits are a preset value. For example, the tail bit part of the at least 6 bits is set to all 0s. The preset value may alternatively be another value, which is stipulated by a protocol or agreed on by negotiation between an AP and a STA. Optionally, the M tail bit parts may be respectively added after the corresponding M A-MPDU subframes. Except a tail bit part of a last A-MPDU subframe, M-1 tail bit parts may be included in corresponding first M-1 A-MPDU subframes and located in last several bits of respective padding fields in the corresponding M-1 A-MPDU subframes. The tail bit part of the last A-MPDU subframe is a tail bit part of the entire A-MPDU frame, and is not changed. In an existing Wi-Fi protocol, a BCC encoder includes 6 registers. Therefore, a tail bit part may be 6 bits, and a value of the tail bit part is all 0s. It may be understood that, certainly, the BCC encoder may alternatively include more than 6 registers, and therefore the tail bit part may alternatively be greater than 6 bits. Certainly, the preset value may alternatively be another value that is not all 0s.

For the first transmission process (encoding before scrambling), initial states for retransmitting each of the N A-MPDU subframes are a tail bit part, and end states therefor are also a tail bit part. Prior-transmission initial states are a tail bit part, and prior-transmission end states are also a tail bit part.

For the second transmission process (scrambling before coding), initial states for retransmitting each of the N A-MPDU subframes are a scrambled tail bit part that is set to a preset value, and end states therefore are also a scrambled tail bit part that is set to a preset value. In an example, performing BCC encoding on the N A-MPDU subframes in the M A-MPDU subframes by using the retransmission encoding parameters to obtain retransmitted coded bits includes: scrambling the N A-MPDU subframes and N tail bit parts corresponding to the N A-MPDU subframes by using a retransmission scrambling sequence, to obtain N scrambled A-MPDU subframes and N scrambled tail bit parts; and setting each of the N scrambled tail bit parts to a preset value, and encoding, by using the retransmission encoding parameters, the N scrambled A-MPDU subframes and the N tail bit parts that are each set to the preset value, to obtain the retransmitted coded bits. Retransmission initial states are a scrambled tail bit part that is set to a preset value, and retransmission end states are a scrambled tail bit part that is set to a preset value. It should be noted that, to ensure that HARQ can still be performed after scrambling and encoding are successively performed, the retransmission scrambling sequence and a prior-transmission scrambling sequence need to be the same, that is, they need to be a same periodic scrambler sequence (depending on a scrambler seed), and the first bit or the n^{th} bit of a sequence used for scrambling the N A-MPDU subframes during the retransmission is respectively the same as the first bit or the n^{th} bit of a sequence used for scrambling the N A-MPDU subframes during the prior transmission. In an example, the scrambling sequence is a periodic 127-bit sequence.

It should be noted that, in the first implementation, a tail bit part that is a preset value needs to be added to each of the first A-MPDU and the second A-MPDU, and transmission processes of the first A-MPDU and the second A-MPDU are the same.

In the first implementation, the initial states and the end states of the BCC encoder for encoding the N A-MPDU subframes during the retransmission are respectively the same as the initial states and the end states of the BCC encoder for encoding the N A-MPDU subframes during the prior transmission. In this way, the receive end can directly perform combined decoding or joint decoding on the LLRs of the priorly transmitted coded bits and the LLRs of the retransmitted coded bits. This improves transmission efficiency.

In a second implementation, no tail bit needs to be added after each A-MPDU subframe in the A-MPDU. Instead, information bits of A-MPDU subframes that are correctly received (or that do not need to be retransmitted) and that are respectively before and after the N retransmission MPDUs are used as the initial states and the end states of the BCC encoder. For the first transmission process (coding before scrambling), when an MPDU is retransmitted, the retransmission initial states are at least last 6 bits of an A-MPDU subframe that is in the first A-MPDU and in which a correctly received MPDU adjacent to and before the retransmission MPDU is located; and the retransmission end states are at least first 6 bits of an A-MPDU subframe that is in the first A-MPDU and in which a correctly received MPDU adjacent to and after the retransmission MPDU is located.

For the second transmission process (scrambling before coding), when an MPDU is retransmitted, the retransmission initial states are at least last 6 scrambled bits of an A-MPDU subframe that is in the first A-MPDU and in which a non-retransmission MPDU adjacent to and before the retransmission MPDU is located; and the retransmission end states are at least first 6 scrambled bits of an A-MPDU subframe that is in the first A-MPDU and in which a non-retransmission MPDU adjacent to and after the retransmission MPDU is located. In addition, a retransmission scrambling sequence and a prior-transmission scrambling sequence are the same, that is, they are a same periodic scrambler sequence (depending on a scrambler seed), and the first bit or the n^{th} bit of a sequence used for scrambling the N A-MPDU subframes during the retransmission is respectively the same as the first bit or the n^{th} bit of a sequence used for scrambling the N A-MPDU subframes during the prior transmission. In an example, the scrambling sequence is a periodic 127-bit sequence.

It should be noted that, in the second implementation, when the N retransmission MPDUs include at least one first-type retransmission MPDU and at least one second-type retransmission MPDU, or the N retransmission MPDUs include a plurality of first-type retransmission MPDUs, or the N retransmission MPDUs include a plurality of second-type retransmission MPDUs, retransmitted coded bits obtained through retransmission encoding are not complete BCC coded bits, but include a plurality of parts.

In the second implementation, no additional tail bit needs to be added. Instead, information bits or scrambled information bits of A-MPDU subframes corresponding to MPDUs that are correctly received (or that do not need to be retransmitted) and that are respectively before and after the N retransmission MPDUs are used as the initial states and the end states of the BCC encoder. Therefore, an existing A-MPDU structure does not need to be modified, and has good compatibility.

In a third implementation, during the prior transmission, the transmit end caches coded bits of the first A-MPDU, including the priorly transmitted coded bits obtained after the N A-MPDU subframes are encoded; and during the retransmission, the transmit end may directly obtain the cached priorly transmitted coded bits of the N A-MPDU subframes as the retransmitted coded bits, so that BCC encoding does not need to be performed on the N A-MPDU subframes again, thereby reducing complexity of the transmit end and improving efficiency of the receive end. The third implementation needs to be combined with the first or the second implementation, so that the initial states of the BCC encoding are the same, and optionally, the end states are also made the same.

For the first implementation, the tail bit part is added in a plurality of manners:
(1) PHY padding method: One tail bit part is added after each A-MPDU subframe, where the tail bit part includes 6 or more tail bits, and is set to a preset value, for example, all 0s.
(2) MAC padding method: In the existing A-MPDU structure, as shown in FIG. 2, each A-MPDU subframe includes an MPDU delimiter, an MPDU, and padding, where there are 0 to 3 padding bytes, and a padding bit value is not defined. Each A-MPDU subframe needs to include an integer multiple of 4 bytes except a last A-MPDU subframe. This mainly enables the receive end to search for an MPDU delimiter quickly through a 4-byte sliding window, so that even when some MPDUs are faulty, other correctly received MPDUs can still be found. A specific MAC padding method at least includes the following:
   I. When an A-MPDU subframe needs to be padded with 0 bytes, the A-MPDU subframe is additionally padded with 4 bytes, at least last 6 bits in the 4 additional padding bytes may be used as a tail bit part, and the tail bit part of the at least 6 bits needs to be set to a preset value, for example, all 0s. Another padding bit may also be set to a preset value.
   II. When an A-MPDU subframe needs to be padded with 1 to 3 bytes, the A-MPDU subframe needs no additional padding byte, at least last 6 bits in the existing 1 to 3 padding bytes are used as a tail bit part, and the tail bit part of the at least 6 bits needs to be set to a preset value, for example, all 0s. Another padding bit may also be set to a preset value.

The second A-MPDU carrying the N A-MPDU subframes is transferred to the PHY layer after being encapsulated at the MAC layer. A physical preamble is added at the PHY layer to form a PPDU. According to the present invention, such physical preamble comprises one or more of the following :a modulation and coding scheme indication, wherein if the modulation and coding scheme indication is a special value, the special value is used to indicate that the second PPDU comprises only a retransmitted MPDU; and tail bit part location indication: used to indicate a location of a tail bit part corresponding to a last A-MPDU subframe in the N A-MPDU subframes.

To support HARQ transmission, optionally, the physical preamble of the PPDU includes one or more of the following indications.

Optionally, the physical preamble includes retransmission indication information. The retransmission indication information is used to indicate whether the PPDU carries a retransmission MPDU, or the retransmission indication information is used to indicate whether combined decoding or joint decoding needs to be performed on HARQ LLRs of the retransmission MPDU in the current PPDU and HARQ LLRs of a corresponding MPDU that is previously incorrectly received. Herein, there may be one or more retransmission MPDUs. For example, if the MPDU retransmission indication is set to a first value, the first value is used to indicate that the PPDU includes a retransmission MPDU, or if the MPDU retransmission indication is set to a second value, the second value indicates that the PPDU does not include a retransmission PPDU. An MPDU that needs to be retransmitted may be an MPDU that is unsuccessfully received in prior transmission, and is used for HARQ transmission. The receive end performs combined decoding or joint decoding on the LLRs of the retransmission MPDU and the LLRs of the corresponding MPDU that previously fails to be transmitted. A non-retransmission MPDU (or referred to as a new-transmission MPDU) may be an MPDU successfully received in the prior transmission, and may further include a retransmission MPDU for ARQ transmission. Although this MPDU is retransmitted, the receive end does not need to perform corresponding HARQ receiving processing on the retransmission MPDU. Optionally, the receive end that receives the retransmission indication may determine whether to perform combined decoding or joint decoding on the HARQ LLRs of the retransmission MPDU in the current PPDU and the HARQ LLRs of the corresponding MPDU that is previously incorrectly received.

Optionally, the physical preamble (PHY preamble) or a preamble (preamble) of the PPDU includes a modulation and coding scheme indication. If the modulation and coding scheme indication is a special value, the special value indicates that the PPDU includes only a retransmission MPDU. Herein, there may be one or more retransmission MPDUs. If all MPDUs included in the A-MPDU are retransmission MPDUs, a special data modulation and coding scheme may be used in the physical preamble for indication, and the special modulation and coding scheme indication is set to a special value, for example, an unused value or a currently undefined value. Currently, a modulation and coding scheme in 802.11ax is represented by 4 bits. Modulation and coding schemes 0 to 11 have been used currently, and modulation and coding schemes 12 to 15 are unused. Therefore, the special value may be 12 to 15.

Optionally, the preamble of the PPDU includes a retransmission length indication, used to indicate a total length of the N A-MPDU subframes including the retransmission MPDUs in the PPDU. The total length is in a unit of byte. In this embodiment of this application, the total length may alternatively be a total virtual length, and a transmission time of the N A-MPDU subframes is equal to the total virtual length divided by a fixed rate, for example, a minimum rate (6 Mbit/s) supported by Wi-Fi. In other words, in an example, the total virtual length may be a length obtained through calculation based on transmission duration and the minimum rate supported by Wi-Fi. Alternatively, the retransmission length indication indicates total duration of the N A-MPDU subframes of the retransmission MPDUs. In the following embodiments, the total length may be an actual length, or may be the total virtual length.

For the first implementation, optionally, the preamble of the PPDU includes a tail bit location indication, used to indicate a tail bit location of a last A-MPDU subframe in A-MPDU subframes of one or more retransmission MPDUs. Optionally, a quantity of bits included in a tail bit part may be agreed on by protocol negotiation, for example, 6 bits. The tail bit location indication may indicate only a location of the first bit (a head bit) or the last bit (an end bit) in the 6 bits. The tail bit location refers to a location of the tail bit part in the second A-MPDU. Carrying the tail bit location indication in the physical preamble can help the receive end quickly find end states, that is, tail bits, of the BCC encoder.

For the second implementation, optionally, the preamble of the PPDU includes an end state location indication, used to indicate an end state location of an A-MPDU subframe corresponding to each first-type retransmission MPDU included in the N retransmission MPDUs and/or an end state location of an A-MPDU subframe corresponding to each second-type retransmission MPDU included in the N retransmission MPDUs. When the N retransmission MPDUs include only one first-type retransmission MPDU or include only second-type retransmission MPDUs, the end state location indication may indicate an end state location of only a last A-MPDU subframe in A-MPDU subframes of one or more retransmission MPDUs.

Optionally, the preamble of the PPDU may not include the retransmission indication. For the first implementation, the retransmission length indication or the tail bit location indication may be multiplexed to indicate whether the PPDU includes a retransmission MPDU. For example, the retransmission length indication may be set to a special value, for example, set to 0. This indicates that the PPDU does not include a retransmission MPDU. If the retransmission length indication is set to another value, the another value indicates that the PPDU includes a retransmission MPDU, and the value may indicate a total length of an A-MPDU subframe including the retransmission MPDU. For another example, the tail bit location indication may be a special value, for example, set to 0. This indicates that the PPDU does not include a retransmission MPDU. If the tail bit location indication is set to another value, the another value indicates that the PPDU includes a retransmission MPDU, and the value may indicate a location of a tail bit part corresponding to a last A-MPDU subframe in A-MPDU subframes including retransmission MPDUs. For the second implementation, the retransmission length indication or the end state location indication may be multiplexed to indicate whether the PPDU includes a retransmission MPDU. A principle thereof is similar to that in the first implementation, and details are not described herein again.

Optionally, the preamble of the PPDU includes a scrambler seed indication, used to indicate a scrambler seed used for scrambling a retransmission MPDU.

Optionally, during the retransmission, performing BCC encoding on the N A-MPDU subframes includes but is not limited to the following two manners:
(1) For HARQ CC, BCC encoding is performed on an A-MPDU subframe corresponding to a single to-be-retransmitted MPDU or A-MPDU subframes corresponding to at least two consecutive to-be-retransmitted MPDUs by using same encoding parameters (including a code rate and a generator polynomial matrix corresponding to the code rate, and optionally including a puncturing mode). That the retransmission encoding parameters and the prior-transmission encoding parameters are the same is as follows: A code rate and a generator polynomial matrix corresponding to the code rate used in the retransmission are the same as those used in the prior transmission. Optionally, the following is further included: puncturing modes used in the retransmission and the prior transmission are the same.

The BCC encoding parameters (the retransmission encoding parameters and the prior-transmission encoding parameters) include a code rate and a generator polynomial matrix corresponding to the code rate, and optionally further include a puncturing mode. Generally, for a standard protocol for application products, one code rate corresponds to one generator polynomial matrix. Optionally, a puncturing mode is further included. In academic discussions, each code rate may correspond to different generator polynomial matrices and puncturing modes.

(2) For HARQ IR, BCC encoding is performed on an A-MPDU subframe corresponding to a single to-be-retransmitted MPDU or A-MPDU subframes corresponding to at least two consecutive to-be-retransmitted MPDUs by using same encoding parameters, including a code rate and a generator matrix corresponding to the code rate. Then, coded bits are periodically punctured based on another puncturing mode different from the puncturing mode for the prior transmission, to generate punctured coded bits. The puncturing mode used for the retransmission and the puncturing mode used for the prior transmission are different, and are in a preset relationship. The coded bits generated in the puncturing mode for the retransmission and those generated in the puncturing mode for the prior transmission may be combined, and the combined encoded bits may be considered as encoded bits generated in another new puncturing mode or generated without a puncturing operation. Therefore, that the retransmission encoding parameters and the prior-transmission encoding parameters are in a preset relationship is as follows: A code rate and a generator polynomial matrix corresponding to the code rate used in the retransmission are the same as those used in the prior transmission. A puncturing mode used in the retransmission and that used in the prior transmission are in a preset relationship.

S104. The receive end performs combined decoding or joint decoding on log-likelihood ratios (LLRs) of retransmitted coded bits and LLRs of priorly transmitted coded bits, to obtain the N A-MPDU subframes.

The receive end may obtain the initial states and the end states of the BCC encoding in a plurality of manners. For a specific manner, refer to the following embodiments.

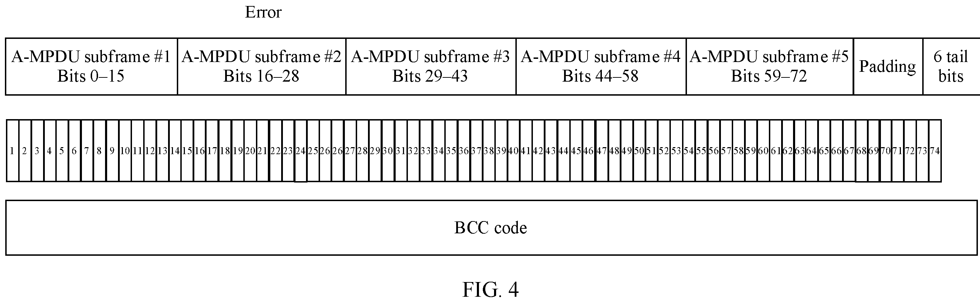

In a simple retransmission method, if the receive end feeds back that one of the MPDUs is incorrectly received, the transmit end usually retransmits the MPDU after encoding an A-MPDU subframe corresponding to the MPDU. However, even if the transmit end encodes the A-MPDU subframe of the retransmission MPDU by using BCCs with a same code rate and code length, because a location of the A-MPDU subframe corresponding to the retransmission MPDU in the priorly transmitted A-MPDU is different from a location thereof in the currently transmitted A-MPDU, the two times of BCC encoding on the A-MPDU subframe corresponding to the MPDU in the prior transmission and the retransmission have different initial states and end states. Therefore, the receive end cannot perform combined decoding or joint decoding on the LLRs of the retransmitted coded bits and the LLRs of the priorly received coded bits. For example, it is assumed that a BCC code rate 1/2 is used. Because a BCC code is a non-block code and has no fixed code length, after encoding, the BCC code is usually considered as a whole BCC code word whose initial states and end states are all 0s. As shown in FIG. 4, in prior transmission, the first A-MPDU includes A-MPDU subframes 1 to 5, which respectively correspond to MPDUs 1 to 5, and MPDU 2 is incorrectly received. A-MPDU subframe 2 includes a total of 13 bits: information bits 16 to 28, and A-MPDU subframe 23 corresponds to 19 BCC encoded bits in the prior transmission. Initial states of this part of BCC encoded bits are last 6 bits, that is, bits 10 to 15, of previous A-MPDU subframe 1 adjacent to A-MPDU subframe 2, and end states thereof are last 6 bits of A-MPDU subframe 2, that is, bits 23 to 28. During retransmission, the transmit end performs BCC encoding on MPDU 2 again. If there is no other MPDU to be transmitted in this case, both the initial states and the end states of the BCC encoder are all 0s. Because the BCC encoding in the two times of transmission uses different initial states and end states, A-MPDU subframe 2 corresponds to different coded bits in the two times of transmission. Therefore, the receive end cannot perform combined decoding or joint decoding on LLRs of retransmitted coded bits and LLRs of the priorly transmitted coded bits in the prior transmission.

In the solution in this embodiment of this application, the receive end is enabled to perform combined decoding and joint decoding on the LLRs of the retransmitted coded bits and the LLRs of the priorly transmitted coded bits. This implements support for HARQ transmission of an A-MPDU structure in a WLAN, and improves transmission efficiency and transmission reliability in the WLAN.

The following describes in detail several implementations provided in this application with reference to more accompanying drawings. Embodiment 2 to Embodiment 5 describe in detail the first implementation (a tail bit part is added) in Embodiment 1. Embodiment 2 and Embodiment 3 are specific to the first process, and Embodiment 4 and Embodiment 5 are specific to the second process. Embodiment 6 to Embodiment 9 describe in detail the second implementation (no tail bit part is added) in Embodiment 1. Embodiment 6 and Embodiment 7 are specific to the first process, and Embodiment 8 and Embodiment 9 are specific to the second process. Embodiment 10 describes retransmission signaling.

With respect to the foregoing first process (that is, the transmit end performs coding before scrambling, and correspondingly the receive end performs descrambling before decoding), Embodiment 2 describes in detail a retransmitted data sending method provided in an embodiment of this application. Because information bits are encoded and then scrambled, each time of A-MPDU transmission may use a same or different scrambling sequence.

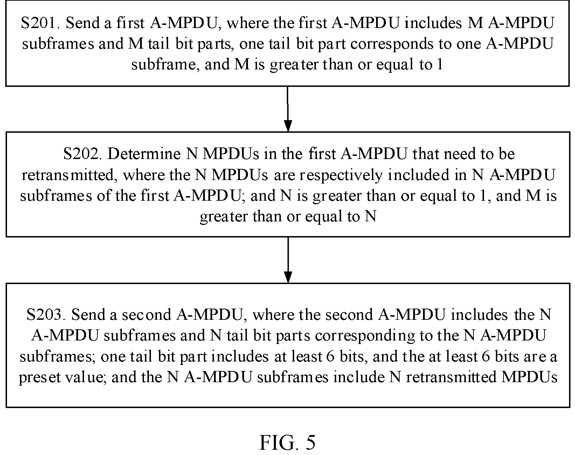

FIG. 5 is a schematic flowchart of a retransmitted data sending method according to an embodiment of this application. The method includes the following steps.

S201. Send a first A-MPDU, where the first A-MPDU includes M A-MPDU subframes and M tail bit parts, one tail bit part corresponds to one A-MPDU subframe, and M is greater than or equal to 1.

Each A-MPDU subframe includes one MPDU. Each A-MPDU subframe corresponds to one tail bit part. The tail bit part includes at least 6 bits, and the at least 6 bits are set to a preset value, for example, all 0s. One tail bit part may be located after one A-MPDU subframe, or may be located in last several bits in the A-MPDU subframe. It may be understood that, the tail bit part may alternatively be another value, and the value of the tail bit part may be agreed on in a protocol, or may be determined by negotiation between an AP and a STA. This is not specifically limited in this embodiment of this application.

In an example, 6 or more preset tail bits, for example, all 0s, are added after each A-MPDU subframe except a last A-MPDU subframe, because 6 tail bits of all 0s are added after the entire A-MPDU.

Tail bit part adding methods include but are not limited to a PHY padding method and a MAC padding method. With the PHY padding method, one tail bit part is located after a corresponding A-MPDU subframe. With the MAC padding method, one tail bit part is last several bits in one A-MPDU subframe.
(1) PHY padding method: 6 or more tail bits are added after each A-MPDU subframe, and are set to a preset value, for example, all 0s.
(2) MAC padding method: In the existing A-MPDU structure, as shown in FIG. 2, each A-MPDU subframe includes an MPDU delimiter, an MPDU, and a padding field, where there are 0 to 3 bytes in a padding field, and a padding bit value is not defined. Each A-MPDU subframe needs to include an integer multiple of 4 bytes except a last A-MPDU subframe. This mainly enables the receive end to search for an MPDU delimiter quickly through a 4-byte sliding window, so that even when some MPDUs are faulty, other correctly received MPDUs can still be found. The MAC padding method may include the following several implementations:
   I. When an A-MPDU subframe needs to be padded with 0 bytes, the A-MPDU subframe needs to be additionally padded with 4 bytes, at least last 6 bits in the 4 additional padding bytes may be used as a tail bit part, and the tail bit part of the at least 6 bits needs to be set to a preset value, for example, all 0s. Another padding bit in the 4 additional padding bytes may also be set to a preset value. In other words, the A-MPDU subframe has no padding field, but includes the 4 additional padding bytes. At least last 6 bits in the 4 additional padding bytes may be used as a tail bit part, and are set to a preset value.
   II. When an A-MPDU subframe needs to be padded with 1 to 3 bytes, the A-MPDU subframe needs no additional padding byte, at least last 6 bits in the existing 1 to 3 padding bytes are used as a tail bit part, and the tail bit part of the at least 6 bits needs to be set to a preset value, for example, all 0s. Another padding bit may also be set to a preset value.

The transmit end performs BCC encoding on the first A-MPDU subframe by using prior-transmission encoding parameters to obtain encoded bits, including priorly transmitted coded bits obtained after performing the BCC encoding on N A-MPDU subframes by using the prior-transmission encoding parameters.

The first A-MPDU is included in a data field of a first PPDU. Optionally, the transmit end may transmit the first PPDU in a single user SU (single user) mode, or may send the first PPDU in a multiple user MU (multiple user) mode. The multiple user mode is further classified into OFDMA transmission, an MU-MIMO mode, or a hybrid mode of OFDMA and MU-MIMO.

S202. Determine N MPDUs in the first A-MPDU that need to be retransmitted, where the N MPDUs are respectively included in N A-MPDU subframes of the first A-MPDU; and N is greater than or equal to 1, and M is greater than or equal to N.

The receive end that receives the first A-MPDU sends, based on its own actual receiving status, acknowledgment feedback information to the transmit end, to notify the transmit end which MPDU in the first A-MPDU transmitted this time is unsuccessfully received. The transmit end determines, with reference to its own sending status and an acknowledgment feedback frame, which MPDU is to be retransmitted. Unsuccessful receiving may also be referred to as a receiving failure, a sending failure, or the like. Optionally, before step S202, the method further includes: the receive end feeds back the acknowledgment information to the transmit end, to indicate that the N MPDUs are unsuccessfully received.

This application does not limit a method for sending acknowledgment feedback by the receive end. The receive end may notify, by using negative acknowledgment NACK information, a bitmap in a block acknowledgment (block ACK) frame, or a bitmap in a multi-STA block ACK frame, the transmit end which MPDU is unsuccessfully received or fails to be received, but that a legacy preamble corresponding to the MPDU is correctly received or a transmit end and a receive end of the MPDU are identifiable, that is, notify the transmit end which MPDU can be retransmitted based on a HARQ rule. The NACK may be a part of a single frame or a multi-STA block ACK. Different from two existing reply manners of an acknowledgment frame and no reply, the NACK notifies the transmit end that all MPDUs sent this time are not correctly received, where "all MPDUs" may be one or more MPDUs, but that physical preambles corresponding to the MPDUs can be correctly received or transmit ends and receive ends of all the MPDUs in this transmission are identifiable.

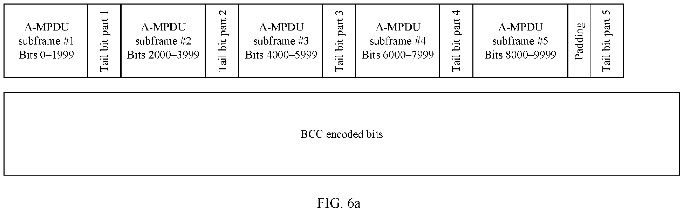

For example, as shown in FIG. 6a, MPDU 2 in A-MPDU subframe 2 and MPDU 2 in A-MPDU subframe 3 in the first A-MPDU subframe are unsuccessfully received, and the acknowledgment feedback frame carries indication information, used to indicate that MPDU 2 and MPDU 3 in the A-MPDU are unsuccessfully received. For example, if the indication information is a bitmap and includes 5 bits, the first bit to the fifth bit respectively correspond to MPDUs in A-MPDU subframes 1 to 5. In an example, if a value 0 indicates unsuccessful receiving and a value 1 indicates successful receiving, a value of the 5 bits may be 10011. Certainly, the following case may alternatively exist: the value 1 indicates unsuccessful receiving, and the value 0 indicates successful receiving. This is not limited in this embodiment of this application.

When all MPDUs included in the A-MPDU are unsuccessfully received, there may be a plurality of feedback manners. A first feedback manner may be a manner of no reply, that is, the receive end does not feed back acknowledgment information to the transmit end. In this case, the receive end can know that all MPDUs are unsuccessfully received. Different from the first feedback manner, a second feedback manner uses NACK information as acknowledgment feedback, to notify the receive end that all MPDUs included in the A-MPDU sent this time are unsuccessfully received. Optionally, the NACK information may be separately encapsulated into one frame, or may be a part of a multi-STA block ACK frame, to notify that all MPDUs included in the A-MPDU sent this time are unsuccessfully received.

In step S202, the transmit end determines that the N MPDUs in the first A-MPDU need to be retransmitted. Optionally, the first A-MPDU further includes another MPDU, and the another MPDU does not need to be retransmitted. Similar to the foregoing embodiments, the N retransmission MPDUs may also include a first-type retransmission MPDU and/or a second-type retransmission MPDU.

S203. Send a second A-MPDU, where the second A-MPDU includes the N A-MPDU subframes and N tail bit parts corresponding to the N A-MPDU subframes; one tail bit part includes at least 6 bits, and the at least 6 bits are a preset value; and the N A-MPDU subframes include N retransmission MPDUs.

After determining that the N MPDUs need to be retransmitted, the transmit end retransmits the N MPDUs in S203. Optionally, in addition to the N retransmission MPDUs, the second A-MPDU certainly may further include another MPDU, and the another MPDU is a new-transmission MPDU (a non-retransmission MPDU). The N A-MPDU subframes including the N retransmission MPDUs are located at a preset location in the second A-MPDU, for example, located at a start location, a middle location, or an end location in the second A-MPDU. Because an A-MPDU may include one or more of a management frame, a control frame, and a data frame, if only the data frame supports HARQ transmission, a retransmission MPDU only needs to be placed at a preset location in each data frame, for example, a start location, a middle location, or an end location. The preset location may be stipulated by a protocol, specified by an AP, or determined by negotiation between an AP and a STA. An order of the N A-MPDU subframes in the second A-MPDU is the same as an order of the N A-MPDU subframes in the first A-MPDU.

Each A-MPDU subframe included in the second A-MPDU also corresponds to one tail bit part. The tail bit part includes at least 6 bits, and is set to a preset value. For example, one tail bit part may be located after one A-MPDU subframe, or may be located in last several bits in the A-MPDU subframe. In step S203, a tail bit part padding method is the same as a tail bit padding method in step S201, and tail bit padding methods used in the retransmission and the prior transmission are the same.

The first A-MPDU is carried in a data field of one first PPDU. The second A-MPDU is carried in a data field of one second PPDU. The first PPDU further includes a physical preamble, and the second PPDU also includes a physical preamble.

Optionally, to support HARQ transmission, a physical preamble of any PPDU may further include one or more of the following:
Retransmission indication: used to indicate whether the PPDU includes a retransmission MPDU. If the retransmission indication is set to a first value, the first value is used to indicate that the PPDU includes a retransmission MPDU, or if the retransmission indication is set to a second value, the second value is used to indicate that the PPDU does not include a retransmission MPDU; or the retransmission indication is used notify the receive end whether combined decoding or joint decoding needs to be performed on HARQ LLRs of a retransmission MPDU in the current PPDU and HARQ LLRs of an MPDU that is previously incorrectly received.

Modulation and coding scheme indication: If the modulation and coding scheme indication is a special value, the special value is used to indicate that the PPDU includes only a retransmission MPDU. In other words, the PPDU does not include a non-retransmission MPDU.

Retransmission length indication: used to indicate a total length or total duration of the N A-MPDU subframes included in the PPDU. Optionally, if the retransmission indication indicates that the PPDU does not include a retransmission MPDU, the retransmission length indication may be omitted, or may be set to a reserved value. If the retransmission indication indicates that the PPDU includes a retransmission MPDU, the retransmission length indication is used to indicate the total length or the total duration of the N A-MPDU subframes corresponding to the N retransmission MPDUs. In addition, the retransmission indication information may alternatively be included in a total length field or a total duration field for the N A-MPDU subframes. That is, when the total length field, a total virtual length field, or the total duration field for the N A-MPDU subframes is equal to 0, it indicates that the PPDU does not include a retransmission MPDU; or when the total length field, a total virtual length field, or the total duration field is another value, it indicates that the PPDU includes a retransmission MPDU, and the value is the total length or the total duration of the N A-MPDU subframes.

Tail bit part location indication: used to indicate a location of a tail bit part corresponding to a last A-MPDU subframe in the N A-MPDU subframes. Optionally, if the MPDU retransmission indication indicates that the PPDU does not include a retransmission MPDU, the tail bit part location indication may be omitted, or may be set to a reserved value. If the MPDU retransmission indication indicates that the PPDU includes a retransmission MPDU, the tail bit part location indication is used to indicate the location of the tail bit part corresponding to the last A-MPDU subframe in the N A-MPDU subframes. The tail bit part location indication may alternatively be multiplexed to indicate whether the PPDU includes a retransmission MPDU. For details, refer to the description in Embodiment 1.

It should be noted that, the foregoing indication information may be further applied to other embodiments, and is not limited to this embodiment. It may be understood that, the first PPDU does not include a retransmission MPDU. Therefore, the retransmission indication of the first PPDU indicates that the first PPDU does not include a retransmission MPDU. The second PPDU includes a retransmission MPDU. Therefore, the retransmission indication of the second PPDU indicates that the second PPDU includes a retransmission MPDU.

After A-MPDU subframes are encapsulated into an A-MPDU, the transmit end needs to perform BCC encoding on the A-MPDU. In an example, the N A-MPDU subframes in the first A-MPDU correspond to the priorly transmitted coded bits obtained by performing BCC encoding by using the prior-transmission encoding parameters; and the N A-MPDU subframes in the second A-MPDU correspond to retransmitted coded bits obtained by performing BCC encoding by using retransmission encoding parameters; where the retransmission encoding parameters and the prior-transmission encoding parameters are the same or are in a preset relationship. Optionally, the transmit end may further perform processing such as scrambling and constellation point mapping on the coded bits of the A-MPDU subframes, and then send the A-MPDU subframes by using an antenna.

The encoding parameters (the retransmission encoding parameters and the prior-transmission encoding parameters) include a code rate and a generator polynomial matrix corresponding to the code rate, and optionally further include a puncturing mode. That the retransmission encoding parameters and the prior-transmission encoding parameters are the same may be as follows: The code rates are the same, and the generator polynomial matrices respectively corresponding to the code rates are the same. Optionally, if the encoding parameters include a puncturing mode, the puncturing mode for the retransmission is also the same as that for the prior transmission. That the retransmission encoding parameters and the prior-transmission encoding parameters are in a preset relationship may be as follows: The code rates are the same, and the generator polynomial matrices respectively corresponding to the code rates are the same. If the encoding parameters include a puncturing mode, a retransmission puncturing mode and a prior-transmission puncturing mode are in a preset relationship. Coded bits obtained in the retransmission puncturing mode and coded bits obtained in the prior-transmission puncturing mode may be combined into coded bits obtained in a new puncturing mode or coded bits that are not punctured.

Optionally, performing BCC encoding on the N A-MPDU subframes includes but is not limited to the following two manners:
(1) For HARQ CC, BCC encoding is performed on an A-MPDU subframe corresponding to a single retransmission MPDU or A-MPDU subframes corresponding to at least two consecutive retransmission MPDUs by using same encoding parameters (including a code rate and a generator polynomial matrix corresponding to the code rate, and optionally including a puncturing mode). That the retransmission encoding parameters and the prior-transmission encoding parameters are the same may be as follows: A code rate and a generator polynomial matrix corresponding to the code rate used in the retransmission are the same as those used in the prior transmission. Optionally, the following is further included: puncturing modes used in the retransmission and the prior transmission are the same.

The BCC encoding parameters (the retransmission encoding parameters and the prior-transmission encoding parameters) include a code rate and a generator polynomial matrix corresponding to the code rate, and optionally further include a puncturing mode. Generally, for a standard protocol for application products, one code rate corresponds to one generator polynomial matrix. Optionally, a puncturing mode is further included. In academic discussions, each code rate may correspond to different generator polynomial matrices and puncturing modes.

(2) For HARQ IR, BCC encoding is performed on an A-MPDU subframe corresponding to a single retransmission MPDU or A-MPDU subframes corresponding to at least two consecutive retransmission MPDUs by using same parameters, including a code rate and a generator matrix corresponding to the code rate. Then, encoded bits are periodically punctured based on another puncturing mode different from the puncturing mode for the prior transmission, to generate punctured encoded bits. The puncturing mode used for the retransmission and the puncturing mode used for the prior transmission are different, and are in a preset relationship. The coded bits generated in the puncturing mode for the retransmission and those generated in the puncturing mode for the prior transmission may be combined, and the combined coded bits may be considered as coded bits generated in another new puncturing mode or generated without a puncturing operation. Therefore, that the retransmission encoding parameters and the prior-transmission encoding parameters are in a preset relationship may be as follows: A code rate and a generator polynomial matrix corresponding to the code rate used in the retransmission are the same as those used in the prior transmission. A puncturing mode used in the retransmission and that used in the prior transmission are in a preset relationship.

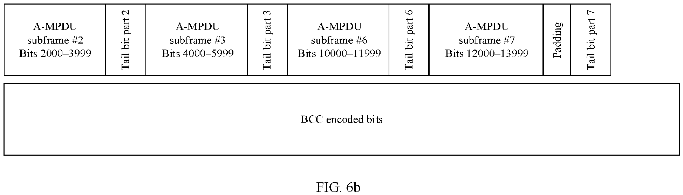

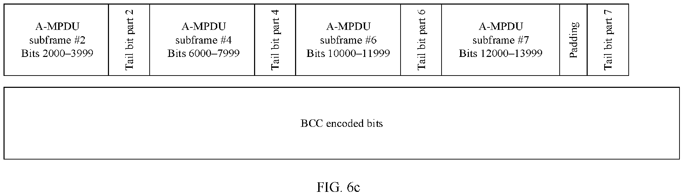

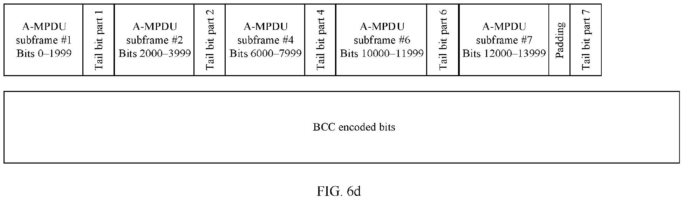

Examples are used for description below. In FIG. 6a, FIG. 6b, FIG. 6c, and FIG. 6d, an example in which one tail bit part is located (or padded) after one A-MPDU subframe is used for description.

As shown in FIG. 6a, a priorly transmitted first A-MPDU successively includes A-MPDU subframes 1 to 5, and further includes five tail bit (tail bit) parts corresponding to the 5 A-MPDU subframes. The tail bit parts are respectively tail bit parts 1 to 5. Each tail bit part is set to a preset value. For example, the tail bit part includes 6 bits, and is set to 00000. The first A-MPDU is encoded by using prior-transmission encoding parameters to obtain BCC coded bits.

For example, the transmit end determines that consecutive MPDU 2 and MPDU 3 in the first A-MPDU need to be retransmitted, and MPDU 2 is included in A-MPDU subframe 2, and MPDU 3 is included in A-MPDU subframe 3. In addition, the transmit end further needs to transmit A-MPDU subframe 6 and A-MPDU subframe 7. As shown in FIG. 6b, the transmit end sends a second A-MPDU. The second A-MPDU includes A-MPDU subframe 2, A-MPDU subframe 3, A-MPDU subframe 6, and A-MPDU subframe 7. Tail bit part 2 is included after A-MPDU subframe 2, tail bit part 3 is after A-MPDU subframe 3, tail bit part 6 is after A-MPDU subframe 6, and tail bit part 7 is after A-MPDU subframe 7. Each tail bit part is a preset value, which is the same as the preset values of the tail bit parts in the first A-MPDU. BCC encoding is performed on the second A-MPDU to obtain BCC coded bits. Retransmission encoding parameters are used for A-MPDU subframe 2 and A-MPDU subframe 3, and the retransmission encoding parameters and the prior-transmission encoding parameters may be the same or in a preset relationship.

For another example, the transmit end determines that non-consecutive MPDU 2 and MPDU 4 in a first A-MPDU subframe need to be retransmitted, and MPDU 2 and MPDU 4 are respectively included in A-MPDU subframe 2 and A-MPDU subframe 4. As shown in FIG. 6c, the transmit end sends A-MPDU subframe 2 and A-MPDU subframe 4, and further sends A-MPDU subframe 6 and A-MPDU subframe 7. Tail bit part 2 is included after A-MPDU subframe 2, tail bit part 4 is included after A-MPDU subframe 4, tail bit part 6 is included after A-MPDU subframe 6, and tail bit part 7 is included after A-MPDU subframe 7. BCC encoding is performed on A-MPDU subframe 2 and A-MPDU subframe 3 by using retransmission encoding parameters to obtain retransmitted coded bits, and the retransmission encoding parameters and the prior-transmission encoding parameters may be the same or in a preset relationship.

For another example, the transmit end determines that consecutive MPDU 1 and MPDU 2 and single MPDU 4 in the first A-MPDU subframe need to be retransmitted. As shown in FIG. 6d, the transmit end sends A-MPDU subframes 1, 2 and 4, and further sends A-MPDU subframes 6 and 7. Tail bit part 1 is included after A-MPDU subframe 1, tail bit part 2 is included after A-MPDU subframe 2, tail bit part 4 is included after A-MPDU subframe 4, tail bit part 6 is included after A-MPDU subframe 6, and tail bit part 7 is included after A-MPDU subframe 7. BCC encoding is performed on A-MPDU subframe 1, A-MPDU subframe 2, and A-MPDU subframe 4 by using retransmission encoding parameters to obtain retransmitted coded bits, and the retransmission encoding parameters and the prior-transmission encoding parameters may be the same or in a preset relationship.

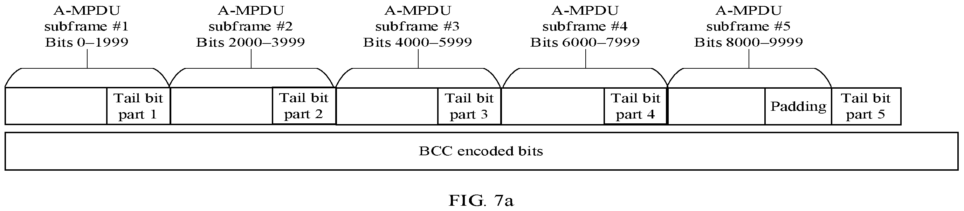

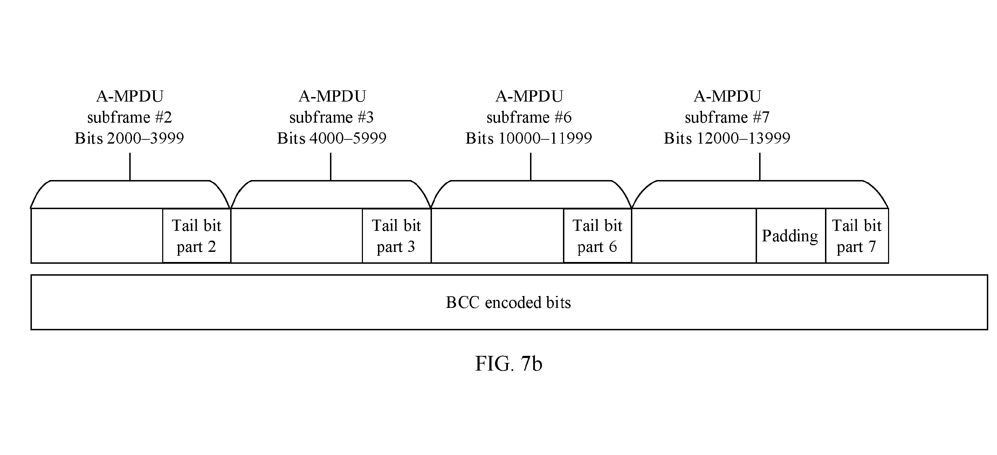

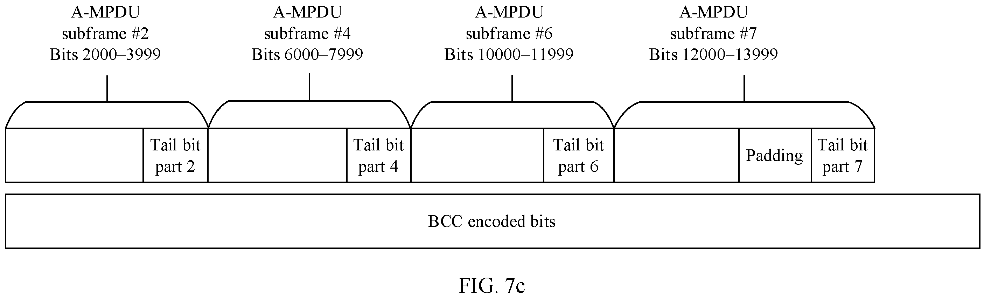

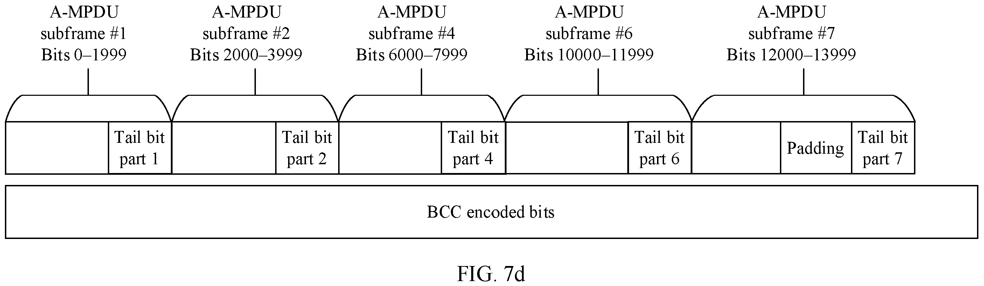

In FIG. 7a, FIG. 7b, FIG. 7c, and FIG. 7d, an example in which a tail bit part is located in last several bits of one A-MPDU subframe is used for description. For a method for padding the last several bits, refer to the foregoing embodiments. Details are not described herein again.

As shown in FIG. 7a, a first A-MPDU successively includes A-MPDU subframes 1 to 5. Last several bits of each A-MPDU subframe are a tail bit part and each tail bit part is a preset value, for example, all 0s.

As shown in FIG. 7b, the transmit end determines that consecutive MPDU 2 and MPDU 3 need to be retransmitted, and a second A-MPDU includes A-MPDU subframes 2 and 3, and A-MPDU subframes 6 and 7.

As shown in FIG. 7c, the transmit end determines that non-consecutive MPDU 2 and MPDU 4 need to be retransmitted. The transmit end sends a second A-MPDU, and the second A-MPDU includes A-MPDU subframes 2 and 4, and A-MPDU subframes 6 and 7.

As shown in FIG. 7d, the transmit end determines that consecutive MPDU 1 and MPDU 2 need to be retransmitted, and single MPDU 4 needs to be retransmitted. The transmit end sends a second A-MPDU, and the second A-MPDU includes A-MPDU subframes 1, 2, and 3, and A-MPDU subframes 6 and 7.

Because the tail bit parts in the first A-MPDU and the second A-MPDU each are a preset value, initial states of BCC encoding performed on a prior-transmission A-MPDU subframe and initial states of a retransmission A-MPDU subframe are both tail bit parts, and respective end states are tail bit parts. Therefore, an entire block of BCC coded bits can be obtained by encoding the second A-MPDU, thereby reducing encoding complexity of the transmit end. In addition, the receive end is enabled to perform combined decoding and joint decoding on LLRs of priorly transmitted coded bits and LLRs of retransmitted coded bits. This implements support for HARQ of an A-MPDU structure in a WLAN, and improves transmission reliability of a WLAN system.

With respect to the foregoing first process (that is, the transmit end performs coding before scrambling, and correspondingly the receive end performs descrambling before decoding), Embodiment 3 describes in detail a retransmitted data receiving method provided in an embodiment of this application, to improve transmission reliability and transmission efficiency of a wireless communications system. Embodiment 3 corresponds to Embodiment 2. Because information bits are encoded and then scrambled, each time of A-MPDU transmission may use a same or different scrambling sequence.

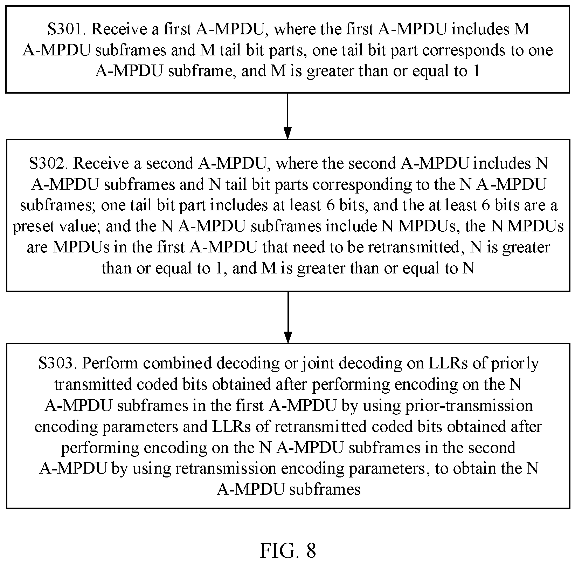

FIG. 8 shows a retransmitted data receiving method according to an embodiment of this application. The method includes the following steps.

S301. Receive a first A-MPDU, where the first A-MPDU includes M A-MPDU subframes and M tail bit parts, one tail bit part corresponds to one A-MPDU subframe, and M is greater than or equal to 1.

Correspondingly, optionally, after performing processing such as constellation point demapping, descrambling, and decoding on a received signal, the receive end obtains the first A-MPDU by parsing. For a detailed description of the first A-MPDU and a tail bit padding method, refer to the description in S201 of the foregoing embodiment. Details are not described herein again.

Optionally, the receive end may determine which MPDU in the first A-MPDU is correctly received and which MPDU in the first A-MPDU is not correctly received. Therefore, the receive end may feed back acknowledgment information to the transmit end. The acknowledgment information is used to indicate which MPDU in the first A-MPDU is successfully received and which MPDU in the first A-MPDU fails to be received. The acknowledgment information may be a block acknowledgment frame, an acknowledgment frame, another frame, or the like. After receiving the acknowledgment information, the receive end may determine which MPDU in the first A-MPDU needs to be retransmitted. For details, refer to step S202 in the foregoing embodiment. The details are not described herein again.

Optionally, the receive end determines that N MPDUs in the first A-MPDU need to be retransmitted, and the N MPDUs are respectively included in N A-MPDU subframes of the first A-MPDU; and N is greater than or equal to 1, and M is greater than or equal to N.

S302. Receive a second A-MPDU, where the second A-MPDU includes the N A-MPDU subframes and N tail bit parts corresponding to the N A-MPDU subframes; one tail bit part includes at least 6 bits, and the at least 6 bits are a preset value; and the N A-MPDU subframes include N MPDUs, the N MPDUs are MPDUs in the first A-MPDU that need to be retransmitted, N is greater than or equal to 1, and M is greater than or equal to N.

For a detailed description of the second A-MPDU and a tail bit padding method, refer to the description in S203 of the foregoing embodiment. Details are not described herein again.

S303. Perform combined decoding or joint decoding on LLRs of priorly transmitted coded bits obtained after performing encoding on the N A-MPDU subframes in the first A-MPDU by using prior-transmission encoding parameters and LLRs of retransmitted coded bits obtained after performing encoding on the N A-MPDU subframes in the second A-MPDU by using retransmission encoding parameters, to obtain the N A-MPDU subframes; where the retransmission encoding parameters and the prior-transmission encoding parameters are the same or are in a preset relationship.

Optionally, in addition to the N retransmission MPDUs, the second A-MPDU certainly may further include another MPDU, and the another MPDU is a new-transmission MPDU. Optionally, the BCC encoding parameters used for the retransmission MPDUs may be different from BCC encoding parameters used for the new-transmission MPDU. This includes: Code rates and puncturing modes may be different. For HARQ CC, the code rate and the puncturing mode used for the A-MPDU subframes including the retransmission MPDUs are respectively the same as a code rate and a puncturing mode used for the A-MPDU subframes for priorly transmitting the MPDUs. For HARQ IR, the code rate and the puncturing mode used for the A-MPDU subframes including the retransmission MPDUs are different from a code rate and a puncturing mode used for the A-MPDU subframes including the priorly transmitted MPDUs. However, the coded bits may be considered as different parts of BCC encoded bits with a low code rate.

The receive end performs combined decoding or joint decoding on the LLRs of the retransmitted coded bits corresponding to the N A-MPDU subframes in the second A-MPDU and the LLRs of the priorly transmitted coded bits of the N A-MPDU subframes priorly transmitted in the first A-MPDU. The receive end may further perform BCC decoding on coded bits corresponding to an A-MPDU subframe of a new-transmission MPDU that may exist in the second A-MPDU.

When BCC decoding is performed on the BCC coded bits of the N A-MPDU subframes corresponding to the N retransmission MPDUs, the receive end may learn, in the following manners, tail bit locations corresponding to the A-MPDU subframes including the retransmission MPDUs in the second A-MPDU.

In a first manner, the receive end learns, by using a retransmission length indication, a total length or total duration of the N A-MPDU subframes including the N retransmission MPDUs.

In a second manner, the receive end learns, by using a tail bit part location indication, a tail bit location corresponding to a last A-MPDU subframe including a retransmission MPDU in the N A-MPDU subframes.

In a third manner, a MAC layer of the receive end searches for an MPDU delimiter (the MPDU delimiter is 4 bytes, including MPDU length indication information; and in addition, an A-MPDU subframe includes an integer multiple of 4 bytes) in first 4 bytes of each A-MPDU subframe through each 4-byte sliding window, so as to obtain a total length of all A-MPDU subframes including a retransmission MPDU. If the entire previously transmitted first A-MPDU is incorrect, the receive end may calculate a total length of all A-MPDU subframes in the first A-MPDU based on a length field in an L-SIG field in a legacy preamble (a non-HT preamble) of a first PPDU carrying the first A-MPDU and a fixed preamble length of the PPDU, so as to obtain a tail bit location corresponding to a last A-MPDU subframe including a retransmission MPDU in the first A-MPDU.

Optionally, if a tail bit location is learned in the third manner, the preamble of the PPDU may not include a retransmission length indication and/or a tail bit location indication. In addition, an order of the N A-MPDU subframes in the first A-MPDU is the same as an order of the N A-MPDU subframes in the second A-MPDU.

For HARQ CC, the receive end may perform combined decoding on LLRs of BCC coded bits of an A-MPDU subframe (the N A-MPDU subframes in the foregoing second A-MPDU) including a retransmission MPDU and LLRs of BCC coded bits of an A-MPDU subframe (the N A-MPDU subframes in the foregoing first A-MPDU) including a previously incorrectly received MPDU.

For HARQ IR, the receive end may perform joint decoding on LLRs of BCC coded bits of an A-MPDU subframe (the foregoing N A-MPDU subframes) including a retransmission MPDU and LLRs of BCC coded bits of an A-MPDU subframe (the N A-MPDU subframes in the foregoing first A-MPDU) including a previously incorrectly received MPDU. For example, a BCC code (which is obtained by puncturing BCC coded bits at a code rate of 1/2 in a mother codebook) at a code rate of 5/6 in an existing Wi-Fi protocol is used for priorly transmitting the first A-MPDU. Retransmission BCC coded bits are also obtained by puncturing the BCC coded bits at the code rate of 1/2 in the mother codebook. The BCC coded bits obtained at the two times may form a BCC code at another code rate, for example, a BCC code at a code rate of 3/4. The BCC code at the code rate of 3/4 may be different from or the same as a BCC code at the code rate of 3/4 used in the existing Wi-Fi protocol.

Based on whether each MPDU in the received second A-MPDU is correctly received, the receive end may perform acknowledgment feedback for each MPDU in the second A-MPDU in manners including no reply, a NACK, an ACK, a block ACK, a multi-STA block ACK, and the like. Details are not described herein again.

Because the tail bit parts in the first A-MPDU and the second A-MPDU each are a preset value, initial states of BCC encoding performed on a prior-transmission A-MPDU subframe and initial states of a retransmission A-MPDU subframe are both tail bit parts, and respective end states are tail bit parts. Therefore, the receive end is enabled to perform combined decoding and joint decoding on LLRs of priorly transmitted coded bits and LLRs of retransmitted coded bits. This implements support for HARQ transmission of an A-MPDU structure in a WLAN, and improves transmission reliability of a WLAN system.

With respect to the foregoing second process (that is, the transmit end performs scrambling before encoding, and correspondingly the receive end performs decoding before descrambling), Embodiment 4 describes in detail a retransmitted data sending method provided in an embodiment of this application, to improve transmission reliability and transmission efficiency of a wireless communications system. Because information bits are scrambled and then encoded, in an example, a retransmission scrambling sequence needs to be the same as a prior-transmission scrambling sequence.

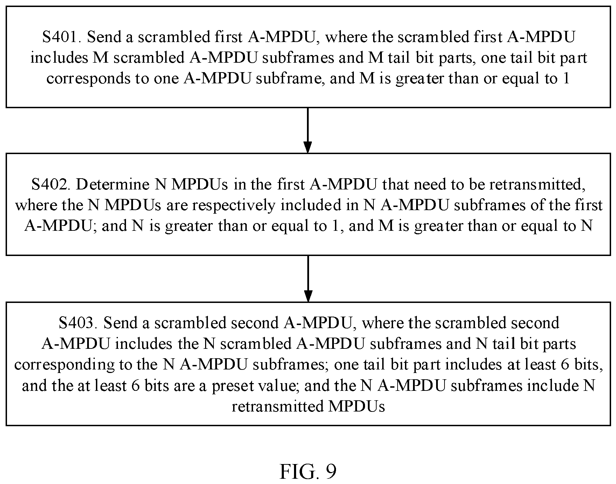

FIG. 9 shows a retransmitted data receiving method according to an embodiment of this application.

S401. A transmit end sends a scrambled first A-MPDU, where the scrambled first A-MPDU includes M scrambled A-MPDU subframes and M tail bit parts, one tail bit part corresponds to one scrambled A-MPDU subframe, and M is greater than or equal to 1.

One tail bit part may be located after one scrambled A-MPDU subframe, or may be located in last several bits in one scrambled A-MPDU subframe. Each tail bit part is a preset value and includes at least 6 bits. For example, the tail bit part is 6 bits and is all 0s. It may be understood that, the tail bit part may alternatively be set to another value, and the value of the tail bit part may be agreed on in a protocol, or may be determined by negotiation between an AP and a STA. This is not specifically limited in this embodiment of this application.

Before sending the scrambled first A-MPDU, the method further includes: the transmit end generates a first A-MPDU, where the first A-MPDU includes M A-MPDU subframes and M tail bit parts, one tail bit part corresponds to one A-MPDU subframe, and M is greater than or equal to 1. The transmit end scrambles the first A-MPDU by using a prior-transmission scrambling sequence, to obtain the scrambled first A-MPDU. The scrambled first A-MPDU includes the M scrambled A-MPDU subframes and the M tail bit parts that are preset values. Optionally, a period of the scrambling sequence is 127 bits. For example, the 127-bit sequence is 00001110 11110010 11001001 00000010 00100110 00101110 10110110 00001100 11010100 11100111 10110100 00101010 11111010 01010001 10111000 1111111. A scrambling process may be: performing an XOR operation on information bits of an A-MPDU from the first bit to the last bit and a scrambling sequence whose period is 127 bits. For example, if the A-MPDU includes 200 bits, an XOR operation is performed on first 127 bits in the A-MPDU and the 127-bit sequence, and then an XOR operation is performed on last 73 bits in the A-MPDU and first 73 bits of the 127 bits.

Further, the transmit end sends coded bits. The coded bits include priorly transmitted coded bits, and the priorly transmitted coded bits are obtained by performing BCC encoding on N scrambled A-MPDU subframes in the scrambled first A-MPDU by using prior-transmission encoding parameters.

Tail bit padding methods may include a PHY padding method and a MAC padding method. With the PHY padding method, one tail bit part is located after a corresponding A-MPDU subframe. With the MAC padding method, one tail bit part is located in last several bits in one A-MPDU subframe.

It should be noted that, to ensure that the tail bit parts included in the scrambled first A-MPDU each are still set to a preset value, the tail bit part may be padded and set in the following manners:
(1) PHY padding method: 6 or more tail bits are added after each A-MPDU subframe, and are set to a preset value, for example, all 0s. It may be understood that, the tail bit part may alternatively be set to another value. This is not specifically limited in this embodiment of this application. Further, the first A-MPDU is encapsulated into a first PPDU. In an implementation: A service field and a data field that are included in the first PPDU are scrambled, and finally, the transmit end replaces 6 or more bits added after each scrambled A-MPDU subframe with a preset value. Alternatively, in another implementation, only the A-MPDU subframes in the first A-MPDU are scrambled, and the tail bit parts after the A-MPDU subframes are not scrambled; therefore, the tail bit parts included in the scrambled first A-MPDU are still preset values. In still another implementation, no tail bit part of at least 6 bits is added after each A-MPDU subframe; instead, the first A-MPDU is scrambled to obtain the scrambled first A-MPDU, and then a tail bit part of at least 6 bits is added after each scrambled A-MPDU subframe, and the tail bit part is set to a preset value.
(2) MAC padding method: In the existing A-MPDU structure, as shown in FIG. 2, each A-MPDU subframe includes an MPDU delimiter, an MPDU, and padding, where there are 0 to 3 padding bytes, and a padding bit value is not defined. Each A-MPDU subframe needs to include an integer multiple of 4 bytes except a last A-MPDU subframe. This mainly enables the receive end to search for an MPDU delimiter quickly through a 4-byte sliding window, so that even when some MPDUs are faulty, other correctly received MPDUs can still be found. A specific MAC padding method is as follows:
   I. When an A-MPDU subframe needs to be padded with 0 bytes, the A-MPDU subframe needs to be additionally padded with 4 bytes, at least last 6 bits in the 4 additional padding bytes may be used as a tail bit part, and the tail bit part of the at least 6 bits needs to be set to a preset value, for example, all 0s. Another padding bit may also be set to a preset value.
   II. When an A-MPDU subframe needs to be padded with 1 to 3 bytes, the A-MPDU subframe needs no additional padding byte, at least last 6 bits in the existing 1 to 3 padding bytes are used as a tail bit part, and the tail bit part of the at least 6 bits needs to be set to a preset value, for example, all 0s. Another padding bit may also be set to a preset value.

After the foregoing two MAC padding manners are used, a MAC layer of the transmit end notifies a PHY layer of a location of at least 6 tail bits included in each A-MPDU subframe in the first A-MPDU. Then, the PHY layer of the transmit end encapsulates the first A-MPDU delivered by the MAC layer to the PHY layer into the first PPDU. The transmit end scrambles the included service field and data field, and then the PHY scrambles the included service field and data field. Finally, the transmit end replaces 6 or more bits added after each scrambled A-MPDU subframe with the preset value.

It should be noted that, an existing 802.11 PPDU includes a preamble, a service field, and a data field. This is not limited in this application. To support HARQ transmission, the service field may or may not exist.

S402. Determine N MPDUs in the first A-MPDU that need to be retransmitted, where the N MPDUs are respectively included in N A-MPDU subframes of the M A-MPDU subframes; and N is greater than or equal to 1, and M is greater than or equal to N.

For step S402, refer to step S202 described above. Details are not described herein again.

S403. Send a scrambled second A-MPDU, where the scrambled second A-MPDU includes the N scrambled A-MPDU subframes and N tail bit parts corresponding to the N A-MPDU subframes; and one tail bit part includes at least 6 bits, and the at least 6 bits are a preset value.

After determining that the N MPDUs need to be retransmitted, the transmit end retransmits the N MPDUs in S403. Optionally, in addition to the N retransmission MPDUs, the second A-MPDU certainly may further include another MPDU, and the another MPDU is a new-transmission MPDU.

In retransmission, one tail bit part may be located after one scrambled A-MPDU subframe, or may be located in last several bits in one scrambled A-MPDU subframe. Each tail bit part is a preset value and includes at least 6 bits. For example, the tail bit part is 6 bits and is all 0s or all 1s. For a tail bit padding and setting method, refer to S401.

Before sending the scrambled second A-MPDU, the method includes: the transmit end generates a second A-MPDU, where the second A-MPDU includes the N A-MPDU subframes and N tail bit parts, one tail bit part corresponds to one A-MPDU subframe, N is greater than or equal to 1, and the N A-MPDU subframes include N retransmission MPDUs. Further, the transmit end scrambles the second A-MPDU to obtain the scrambled second A-MPDU. The scrambled second A-MPDU includes the N scrambled A-MPDU subframes and the N tail bit parts that are preset values. Further, the transmit end sends coded bits corresponding to the second A-MPDU. The coded bits include retransmitted coded bits, and the retransmitted coded bits are obtained by performing BCC encoding on the N scrambled A-MPDU subframes by using retransmission encoding parameters.

The A-MPDU subframes including the retransmission MPDUs and the A-MPDU subframes including the priorly transmitted MPDUs need to use a same scrambling sequence, that is, a same periodic scrambler sequence (depending on a scrambler seed), and the first bit or the n^{th} bit of a scrambling sequence used for scrambling the N A-MPDU subframes (including the retransmission MPDUs) during the retransmission is respectively the same as the first bit or the n^{th} bit of a scrambling sequence used for scrambling the N A-MPDU subframes during the prior transmission.

Optionally, in the second A-MPDU, an A-MPDU subframe including a new-transmission MPDU may be scrambled by using another new periodic scrambling sequence different from the retransmission scrambling sequence. For example, the scrambler seed is generated by using an existing 802.11ac/ax method, and a scrambler is the same as that used in 802.11ac/ax and generates a periodic 127-bit sequence. Certainly, the A-MPDU subframe including the new-transmission MPDU may alternatively be scrambled by using a periodic scrambling sequence that is the same as the retransmission scrambler sequence.

Optionally, the preamble of the first PPDU and that of a second PPDU in Embodiment 4 each may also include the retransmission indication, the modulation and coding scheme indication, the retransmission length indication, the tail bit part location indication, or the like described in Embodiment 2 or Embodiment 1. Details are not described herein. Optionally, Embodiment 4 may further include a scrambler seed indication, used to indicate a scrambler seed used for scrambling a retransmission MPDU.

Because the tail bit parts in the first A-MPDU and the second A-MPDU each are a preset value, initial states of BCC encoding performed on a prior-transmission A-MPDU subframe and initial states of a retransmission A-MPDU subframe are both tail bit parts, and respective end states are tail bit parts. In this way, the receive end can perform combined decoding and joint decoding on LLRs of priorly transmitted coded bits and LLRs of retransmitted coded bits. This implements support for HARQ of an A-MPDU structure in a WLAN, and improves transmission reliability of a WLAN system.

With respect to the foregoing second process (that is, the transmit end performs scrambling before coding, and correspondingly the receive end performs decoding before descrambling), Embodiment 5 describes in detail a retransmitted data receiving method provided in an embodiment of this application, to improve transmission reliability and transmission efficiency of a wireless communications system. Because information bits are scrambled and then encoded, in an example, a retransmission scrambling sequence needs to be the same as a prior-transmission scrambling sequence. Embodiment 5 corresponds to Embodiment 4.

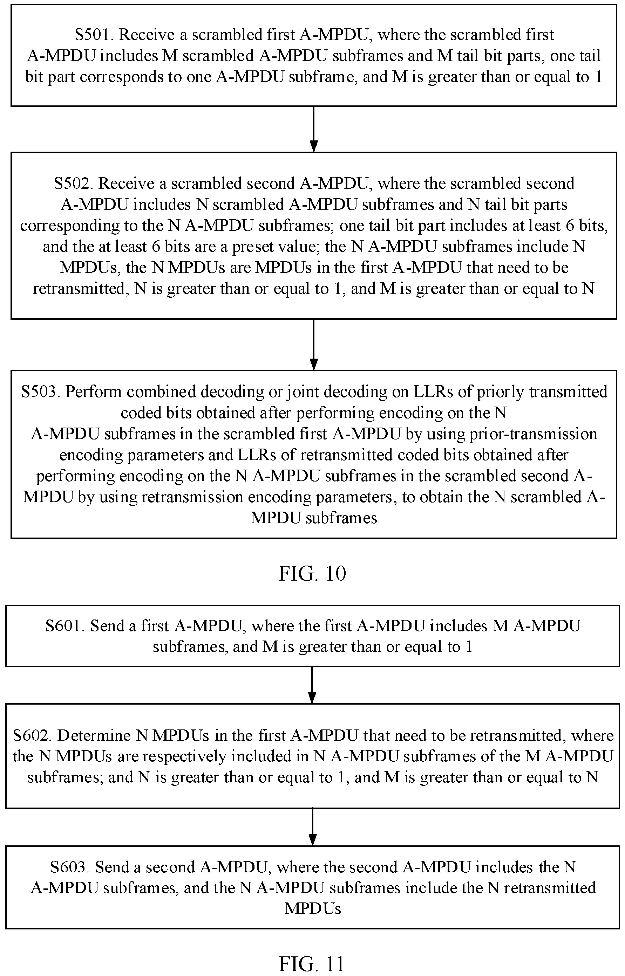

FIG. 10 shows a retransmitted data receiving method according to an embodiment of this application. The method includes the following steps.

S501. Receive a scrambled first A-MPDU, where the scrambled first A-MPDU includes M scrambled A-MPDU subframes and M tail bit parts, one tail bit part corresponds to one A-MPDU subframe, and M is greater than or equal to 1.

Correspondingly, optionally, after performing processing such as constellation point demapping, decoding, and descrambling on a received signal, the receive end obtains the first A-MPDU by parsing. For a detailed description of the first A-MPDU and a tail bit padding method, refer to the description in S401 of the foregoing embodiment. Details are not described herein again.

Optionally, the receive end may determine which MPDU in the first A-MPDU is correctly received and which MPDU in the first A-MPDU is not correctly received. Therefore, the receive end may feed back acknowledgment information to the transmit end. The acknowledgment information is used to indicate which MPDU in the first A-MPDU is successfully received and which MPDU in the first A-MPDU fails to be received. The acknowledgment information may be a block acknowledgment frame, an acknowledgment frame, another frame, or the like. After receiving the acknowledgment information, the receive end may determine which MPDU in the first A-MPDU needs to be retransmitted. For details, refer to step S202 in the foregoing embodiment. The details are not described herein again.

Herein, the receive end determines that N MPDUs in the first A-MPDU need to be retransmitted, and the N MPDUs are respectively included in N A-MPDU subframes of the first A-MPDU; and N is greater than or equal to 1, and M is greater than or equal to N.

S502. Receive a scrambled second A-MPDU, where the scrambled second A-MPDU includes the N scrambled A-MPDU subframes and N tail bit parts corresponding to the N scrambled A-MPDU subframes; one tail bit part includes at least 6 bits, and the at least 6 bits are a preset value; the N A-MPDU subframes include N MPDUs, and the N MPDUs are MPDUs in the first A-MPDU that need to be retransmitted; and N is greater than or equal to 1, and M is greater than or equal to N.

For a detailed description of the second A-MPDU and a tail bit padding method, refer to the description in S403 of the foregoing embodiment. Details are not described herein again.

S503. Perform combined decoding or joint decoding on LLRs of priorly transmitted coded bits obtained after performing encoding on the N scrambled A-MPDU subframes in a scrambled first A-MPDU by using prior-transmission encoding parameters and LLRs of retransmitted coded bits obtained after performing encoding on the N scrambled A-MPDU subframes in the scrambled second A-MPDU by using retransmission encoding parameters, to obtain the N scrambled A-MPDU subframes; where the retransmission encoding parameters and the prior-transmission encoding parameters are the same or are in a preset relationship.

Further, the method further includes: descrambling the N scrambled A-MPDU subframes to obtain the N A-MPDU subframes, so as to implement HARQ transmission of the N MPDUs included in the N A-MPDU subframes.

Optionally, in addition to the N retransmission MPDUs, the second A-MPDU certainly may further include another MPDU, and the another MPDU is a new-transmission MPDU. Optionally, the BCC encoding parameters used for the retransmission MPDUs may be different from BCC encoding parameters used for the new-transmission MPDU. This includes: Code rates and puncturing modes may be different. For HARQ CC, the code rate and the puncturing mode used for the A-MPDU subframes including the retransmission MPDUs are respectively the same as a code rate and a puncturing mode used for the A-MPDU subframes for priorly transmitting the MPDUs. For HARQ IR, the code rate and the puncturing mode used for the A-MPDU subframes including the retransmission MPDUs are different from a code rate and a puncturing mode used for the A-MPDU subframes including the priorly transmitted MPDUs. However, the coded bits may be considered as different parts of BCC coded bits with a low code rate.

The receive end performs combined decoding or joint decoding on the LLRs of the retransmitted coded bits corresponding to the N A-MPDU subframes in the second A-MPDU and the LLRs of the priorly transmitted coded bits of the N A-MPDU subframes priorly transmitted in the first A-MPDU. The receive end may further perform BCC decoding on coded bits corresponding to an A-MPDU subframe of a new-transmission MPDU that may exist in the second A-MPDU.

The first A-MPDU is carried in a data field of a first PPDU. The second A-MPDU is carried in a data field of a second PPDU. The first PPDU further includes a physical preamble, and the second PPDU also includes a physical preamble. Optionally, the physical preamble of the first PPDU and that of the second PPDU in Embodiment 5 each may also include the retransmission indication, the modulation and coding scheme indication, the retransmission length indication, the tail bit part location indication, or the like described in Embodiment 2 or Embodiment 1. Details are not described herein. Optionally, a PPDU in Embodiment 5 may further include a scrambler seed indication, used to indicate a scrambler seed used for scrambling a retransmission MPDU. In addition, in Embodiment 5, the receive end may further learn a tail bit location in a plurality of manners. For details, refer to the three manners (the first, second, and third manners) in Embodiment 2. The details are not described herein again.

Because initial states of BCC encoding and initial states of a retransmission A-MPDU subframe are both tail bit parts, and respective end states are tail bit parts. Therefore, the receive end is enabled to perform combined decoding and joint decoding on LLRs of priorly transmitted coded bits and LLRs of retransmitted coded bits. This implements support for HARQ transmission of an A-MPDU structure in a WLAN, and improves transmission reliability of a WLAN system.

With respect to the foregoing first process (that is, the transmit end performs coding before scrambling, and correspondingly the receive end performs descrambling before decoding), Embodiment 6 describes in detail a retransmitted data sending method provided in an embodiment of this application, to improve transmission reliability and transmission efficiency of a wireless communications system. Because information bits are encoded and then scrambled, each time of A-MPDU transmission may use a same or different scrambling sequence.

FIG. 11 is a schematic flowchart of a retransmitted data receiving method according to an embodiment of this application. The method includes the following steps.

S601. Send a first A-MPDU, where the first A-MPDU includes M A-MPDU subframes, and M is greater than or equal to 1.

The first A-MPDU is included in a data field of a first PPDU, and the first PPDU further includes a physical preamble.

S602. Determine N MPDUs in the first A-MPDU that need to be retransmitted, where the N MPDUs are respectively included in N A-MPDU subframes of the M A-MPDU subframes; and N is greater than or equal to 1, and M is greater than or equal to N.

For step S602, refer to step S202 described above. Details are not described herein again.

S603. Send a second A-MPDU, where the second A-MPDU includes the N A-MPDU subframes, and the N A-MPDU subframes include the N retransmission MPDUs.

The second A-MPDU is included in a data field of a second PPDU, and the second PPDU further includes a physical preamble.

The N A-MPDU subframes including the N retransmission MPDUs are located at a preset location in the second A-MPDU, for example, located at a start location, a middle location, or an end location in the second A-MPDU. Because an A-MPDU may include one or more of a management frame, a control frame, and a data frame, if only the data frame supports HARQ transmission, a retransmission MPDU only needs to be placed at a preset location in each data frame, for example, a start location, a middle location, or an end location. The preset location may be stipulated by a protocol, specified by an AP, or determined by negotiation between an AP and a STA. An order of the N A-MPDU subframes in the second A-MPDU is the same as an order of the N A-MPDU subframes in the first A-MPDU.

The N retransmission MPDUs include at least one of a first-type retransmission MPDU and second-type retransmission MPDUs. Initial states of BCC encoding performed on an A-MPDU subframe of the first-type retransmission MPDU or A-MPDU subframes of the second-type retransmission MPDUs in the N A-MPDU subframes are at least last 6 bits of a correctly received A-MPDU subframe before the A-MPDU subframe of the first-type retransmission MPDU or the A-MPDU subframes of the second-type retransmission MPDUs in the first A-MPDU. End states of the BCC encoding performed on the A-MPDU subframe of the first-type retransmission MPDU or the A-MPDU subframes of the second-type retransmission MPDUs are at least first 6 bits of a correctly received A-MPDU subframe after the A-MPDU subframe of the first-type retransmission MPDU or the A-MPDU subframes of the second-type retransmission MPDUs in the first A-MPDU, where the at least first 6 bits are used as information tail bits.

When the N retransmission MPDUs are retransmitted, the BCC encoding is separately performed on the A-MPDU subframe including the first-type retransmission MPDU and the A-MPDU subframes including the second-type retransmission MPDUs. Regardless of which type of retransmission MPDU, the initial states and the end states of the BCC encoding are respectively at least 6 bits of correctly received information adjacent to and before the first-type or second-type retransmission MPDU and at least 6 bits of correctly received information adjacent to and after the first-type or second-type retransmission MPDU. The at least 6 correctly received adjacent bits before the retransmission MPDU and those after the retransmission MPDU are respectively included in correctly received A-MPDU subframes, where the correctly received A-MPDU subframes are respectively located before and adjacent to the A-MPDU subframe including the retransmission MPDU and after and adjacent to the A-MPDU subframe including the retransmission MPDU. BCC encoding parameters used for each of retransmission and prior transmission may include a code rate and a generator polynomial matrix, and optionally further include a puncturing mode. Optionally, the retransmission encoding parameters and the prior-transmission encoding parameters are the same or are in a preset relationship.

Optionally, to support HARQ, the physical preamble of each of the first PPDU and/or the second PPDU further includes one or more of the following:

Retransmission indication: used to indicate whether the PPDU includes a retransmission MPDU. If the retransmission indication is set to a first value, the first value is used to indicate that the PPDU includes a retransmission MPDU, or if the retransmission indication is set to a second value, the second value is used to indicate that the PPDU does not include a retransmission MPDU; or the retransmission indication is used notify the receive end whether combined decoding or joint decoding needs to be performed on HARQ LLRs of a retransmission MPDU in the current PPDU and HARQ LLRs of an MPDU that is previously incorrectly received.

Modulation and coding scheme indication: If the modulation and coding scheme indication is a special value, the special value is used to indicate that the PPDU includes only a retransmission MPDU. In other words, the PPDU does not include a non-retransmission MPDU.

Retransmission length indication: used to indicate a total length or total duration of the N A-MPDU subframes including the N retransmission MPDUs in the PPDU. Optionally, if the retransmission indication indicates that the PPDU does not include a retransmission MPDU, the retransmission length indication may be omitted, or may be set to a reserved value. If the retransmission indication indicates that the PPDU includes a retransmission MPDU, the retransmission length indication is used to indicate the total length or the total duration of the N A-MPDU subframes corresponding to the N retransmission MPDUs.

End state location indication: used to indicate end states of the BCC encoding performed on the A-MPDU subframe of the first-type retransmission MPDU and/or the A-MPDU subframes of the second-type retransmission MPDUs in the N A-MPDU subframes, that is, a location of at least 6 information bits additionally transmitted during the BCC encoding when the A-MPDU subframe including the first-type retransmission MPDU or the A-MPDU subframes including the second-type retransmission MPDUs are retransmitted, and the at least 6 information bits have been correctly received. The at least 6 information bits are at least first 6 bits in a correctly received A-MPDU subframe after the A-MPDU subframe including the first-type retransmission MPDU or the A-MPDU subframes including the second-type retransmission MPDUs. Optionally, if the retransmission indication indicates that the PPDU does not include a retransmission MPDU, the end state location indication may be omitted, or may be set to a reserved value. If the retransmission indication indicates that the PPDU includes a retransmission MPDU, the end state location indication is used to indicate an end state location corresponding to each of the N A-MPDU subframes corresponding to retransmission of the N MPDUs. It should be noted that, the end state location indication needs to indicate end states of each first-type retransmission MPDU and each second-type MPDU. If the N retransmission MPDUs include only one first-type retransmission MPDU (a single retransmission MPDU) or one second-type retransmission MPDU (a plurality of consecutive retransmission MPDUs), the end state location indication only needs to indicate an end state location corresponding to one first-type or second-type retransmission MPDU. However, if the N retransmission MPDUs include a plurality of first-type retransmission MPDUs and/or a plurality of second-type retransmission MPDUs, the end state location indication needs to indicate an end state location corresponding to each first-type retransmission MPDU and/or an end state location corresponding to each second-type retransmission MPDU.

It should be noted that, the foregoing indication information carried in the preamble of the PPDU may be further applied to other embodiments, and is not limited to this embodiment.

Optionally, to support HARQ, performing BCC encoding on the N A-MPDU subframes includes but is not limited to the following two manners:
(1) For HARQ CC, BCC encoding is performed on an A-MPDU subframe corresponding to a to-be-retransmitted MPDU (a first-type retransmission MPDU) or A-MPDU subframes corresponding to consecutive to-be-retransmitted MPDUs (second-type retransmission MPDUs) and at least 6 bits of correctly received information after the A-MPDU subframe by using same encoding parameters, including a code rate and a generator polynomial matrix corresponding to the code rate, and optionally a puncturing mode. Initial states of the BCC encoding are at least 6 bits of correctly received information before the A-MPDU subframe, and end states thereof are at least 6 bits of correctly received information after the A-MPDU subframe.

It should be noted that, the BCC encoding parameters include a code rate, a generator polynomial matrix, and a puncturing mode. Generally, for a standard protocol for application products, one code rate corresponds to one generator polynomial matrix (this is considered optimal at present). Optionally, a puncturing mode is further included. In academic discussions, each code rate may correspond to different generator polynomial matrices and puncturing modes.

(2) For HARQ IR, BCC encoding is performed on an A-MPDU subframe corresponding to a to-be-retransmitted MPDU (a first-type retransmission MPDU) or A-MPDU subframes corresponding to consecutive to-be-retransmitted MPDUs (second-type retransmission MPDUs) and at least 6 bits of correctly received information after the A-MPDU subframe by using same parameters, including a code rate and a generator matrix corresponding to the code rate. Initial states of a BCC encoder are at least 6 bits of correctly received information before the A-MPDU subframe, and end states thereof are at least 6 bits of correctly received information after the A-MPDU subframe.

Then, the transmit end punctures coded bits periodically based on another puncturing mode different from the puncturing mode used for the prior transmission, to generate punctured coded bits. The puncturing mode used for the retransmission and the puncturing mode used for the prior transmission are different. The coded bits generated in these two or more puncturing modes may be combined, and the combined coded bits may be considered as coded bits generated in another new puncturing mode or generated without a puncturing operation.

Optionally, the transmit end may further perform baseband and radio frequency operations such as scrambling and constellation point mapping on the coded bits obtained after encoding the N A-MPDU subframes, and then send the N A-MPDU subframes by using an antenna. Optionally, the N A-MPDU subframes may further be aggregated with an A-MPDU subframe corresponding to another new-transmission MPDU, and then be transmitted.

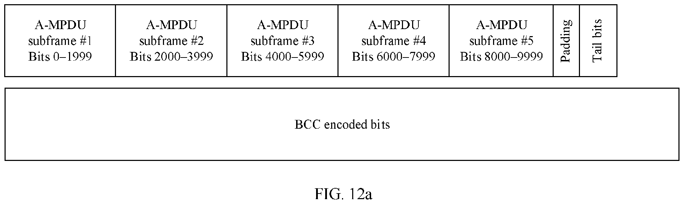

Examples are used for description below. As shown in FIG. 12a, in prior transmission, a first A-MPDU sent by the transmit end successively includes A-MPDU subframes 1 to 5.

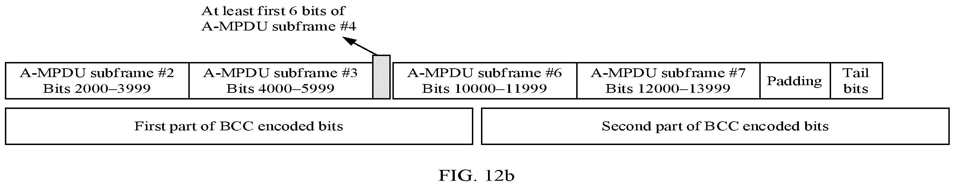

The transmit end determines that MPDU 2 and MPDU 3 included in A-MPDU subframes 2 and 3 need to be retransmitted, and that A-MPDU subframes 6 and 7 further need to be newly transmitted. For example, as shown in FIG. 12b, a second A-MPDU sent by the transmit end includes A-MPDU subframes 2, 3, 6, and 7. The transmit end performs BCC encoding on A-MPDU subframes 2 and 3 and at least first 6 bits of A-MPDU subframe 4 to obtain a first part of BCC coded bits (retransmitted coded bits), where initial states of the BCC encoding are at least last 6 bits of A-MPDU subframe 1, and end states are at least first 6 bits of A-MPDU subframe 4; and performs BCC encoding on A-MPDU subframes 6 and 7 to obtain a second part of BCC encoded bits, where initial states of the BCC encoding may be at least 6 bits whose values are all 0s, and end states thereof may be tail bits of A-MPDU subframe 7. The end state indication information may indicate that an end state location of A-MPDU subframes 2 and 3 is at least first 6 bits of A-MPDU subframe 4.

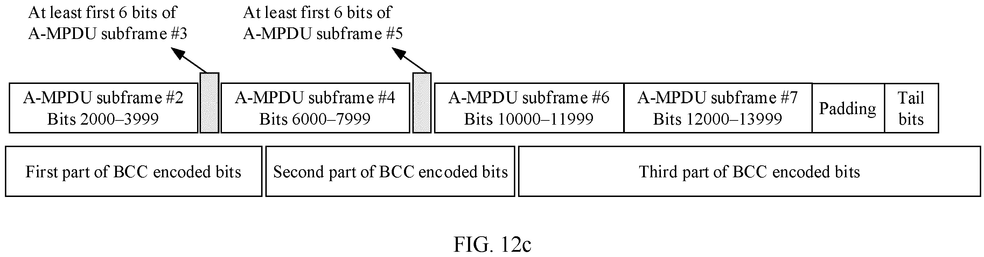

For another example, as shown in FIG. 12c, if the transmit end determines that MPDU 2 and MPDU 4 in A-MPDU subframes 2 and 4 need to be retransmitted and A-MPDU subframes 6 and 7 further need to be newly transmitted, a second A-MPDU sent by the transmit end includes A-MPDU subframes 2, 4, 6, and 7. BCC encoding is performed on A-MPDU subframe 2 and at least first 6 bits of A-MPDU subframe 3 to obtain a first part of BCC encoded bits, where initial states of the BCC encoding are at least last 6 bits of A-MPDU subframe 1, and end states thereof are at least first 6 bits of A-MPDU subframe 3. BCC encoding is performed on A-MPDU subframe 4 and at least first 6 bits of A-MPDU subframe 5 to obtain a second part of BCC coded bits, where initial states of the BCC encoding are at least last 6 bits of A-MPDU subframe 3, and end states thereof are at least first 6 bits of A-MPDU subframe 5. BCC encoding is performed on A-MPDU subframe 6 and A-MPDU subframe 7 to obtain a third part of BCC coded bits, where initial states of the BCC encoding are at least 6 bits whose values are all 0s, and end states thereof are tail bits of A-MPDU subframe 7. The end state indication information may indicate that an end state location of A-MPDU subframe 2 is at least first 6 bits of A-MPDU subframe 3, and an end state location of A-MPDU subframe 4 is at least first 6 bits of A-MPDU subframe 5.

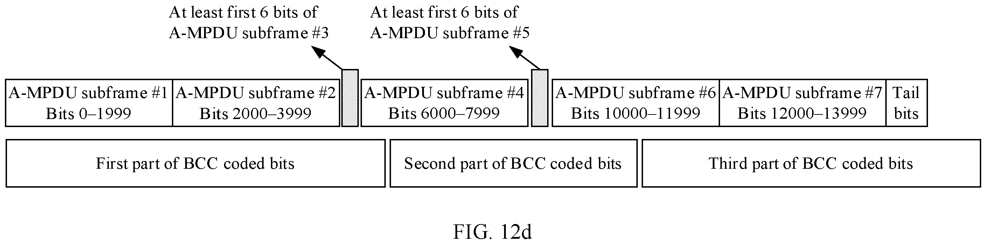

For another example, as shown in FIG. 12d, if the transmit end determines that MPDU 1, MPDU 2, and MPDU 4 included in A-MPDU subframes 1, 2, and 4 need to be retransmitted and A-MPDU subframes 6 and 7 further need to be newly transmitted, a second A-MPDU sent by the transmit end includes A-MPDU subframes 1, 2, 4, 6, and 7. BCC encoding is performed on A-MPDU subframes 1 and 2 and at least first 6 bits of A-MPDU subframe 3 to obtain a first part of BCC coded bits, where initial states of the BCC encoding are a preset value and the preset value is the same as that in prior transmission, for example, all 0s, and end states thereof are at least first 6 bits of A-MPDU subframe 3. BCC encoding is performed on A-MPDU subframe 4 and at least first 6 bits of A-MPDU subframe 5 to obtain a second part of BCC encoded bits, where initial states of the BCC encoding are at least last 6 bits of A-MPDU subframe 3, and end states thereof are at least first 6 bits of A-MPDU subframe 5. BCC encoding is performed on A-MPDU subframe 6 and A-MPDU subframe 7 to obtain a third part of BCC coded bits, where initial states of the BCC encoding may be at least 6 bits whose values are all 0s, and end states thereof are tail bits of A-MPDU subframe 7. The end state indication information may indicate that an end state location of A-MPDU subframes 1 and 2 is at least first 6 bits of A-MPDU subframe 3, and an end state location of A-MPDU subframe 4 is at least first 6 bits of A-MPDU subframe 5.

Initial states of a retransmission A-MPDU subframe are information bits of a correctly received adjacent A-MPDU subframe and are the same as initial states for priorly transmitting the A-MPDU subframe. Therefore, the receive end is enabled to perform combined decoding and joint decoding on LLRs of priorly transmitted coded bits and LLRs of retransmitted coded bits. This implements support for HARQ of an A-MPDU structure in a WLAN, and improves transmission reliability of a WLAN system.

With respect to the foregoing first process (that is, the transmit end performs encoding before scrambling, and correspondingly the receive end performs descrambling before decoding), Embodiment 7 describes in detail a retransmission data receiving method provided in an embodiment of this application, to improve transmission reliability and transmission efficiency of a wireless communications system. Embodiment 7 corresponds to Embodiment 6. Because information bits are encoded and then scrambled, each time of A-MPDU transmission may use a different scrambling sequence for scrambling.

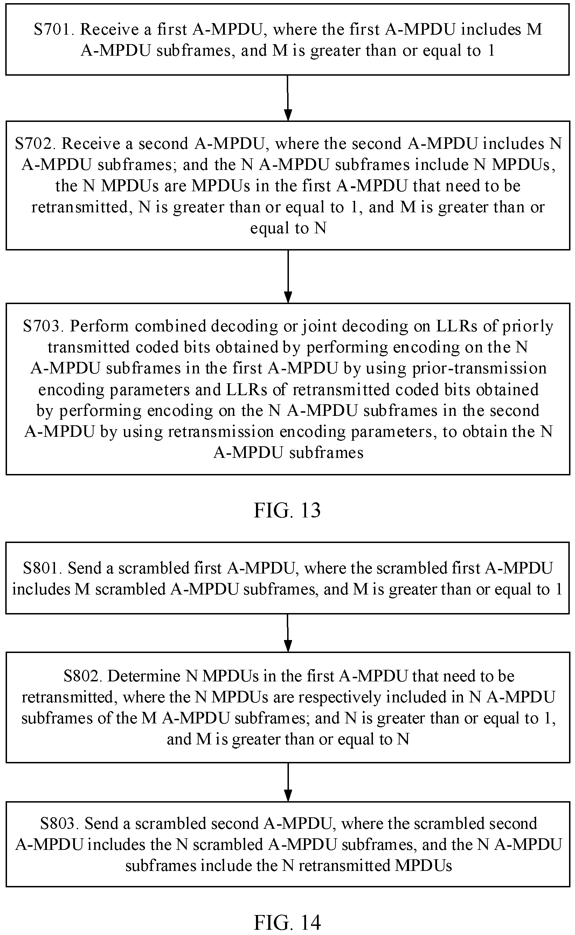

As shown in FIG. 13, the method includes the following steps.

S701. Receive a first A-MPDU, where the first A-MPDU includes M A-MPDU subframes, and M is greater than or equal to 1.

The receive end determines N MPDUs in the first A-MPDU that need to be retransmitted, and sends feedback information to the transmit end, where the N MPDUs are respectively included in N A-MPDU subframes of the M A-MPDU subframes; and N is greater than or equal to 1, and M is greater than or equal to N. For a specific manner of sending the feedback information, refer to the description in step S202.

S702. Receive a second A-MPDU, where the second A-MPDU includes the N A-MPDU subframes.

The N retransmission MPDUs include at least one of a first-type retransmission MPDU and second-type retransmission MPDUs. Initial states of BCC encoding performed on an A-MPDU subframe of the first-type retransmission MPDU or A-MPDU subframes of the second-type retransmission MPDUs in the N A-MPDU subframes are at least last 6 bits of a correctly received A-MPDU subframe before the A-MPDU subframe of the first-type retransmission MPDU or the A-MPDU subframes of the second-type retransmission MPDUs in the first A-MPDU. End states of the BCC encoding performed on the A-MPDU subframe of the first-type retransmission MPDU or the A-MPDU subframes of the second-type retransmission MPDUs in the N A-MPDU subframes are at least first 6 bits of a correctly received A-MPDU subframe after the A-MPDU subframe of the first-type retransmission MPDU or the A-MPDU subframes of the second-type retransmission MPDUs in the first A-MPDU.

The second A-MPDU is included in a data field of a second PPDU, and the second PPDU further includes a physical preamble.

S703. Perform combined decoding or joint decoding on LLRs of priorly transmitted coded bits obtained by performing encoding on N A-MPDU subframes in the first A-MPDU by using prior-transmission encoding parameters and LLRs of retransmitted coded bits obtained by performing encoding on the N A-MPDU subframes in the second A-MPDU by using retransmission encoding parameters, to obtain the N A-MPDU subframes.

The receive end performs combined decoding or joint decoding on the LLRs of the retransmitted coded bits corresponding to the N A-MPDU subframes in the second A-MPDU and the LLRs of the priorly transmitted coded bits of the N A-MPDU subframes priorly transmitted in the first A-MPDU. The receive end may further perform BCC decoding on coded bits corresponding to an A-MPDU subframe of a new-transmission MPDU that may exist in the second A-MPDU.

The receive end may obtain, in a plurality of manners, the initial states and the end states of the BCC encoding performed on the N A-MPDU subframes. These manners include but are not limited to the following:
In a first manner, the receive end learns initial states and end states of corresponding BCC encoding by using a length of an A-MPDU subframe of a retransmission MPDU and a total length of a plurality of A-MPDU subframes of consecutive retransmission MPDUs. The initial states and the end states of the BCC encoding are respectively at least 6 bits of correctly received information adjacent to and before the A-MPDU subframe of the retransmission MPDU or the plurality of A-MPDU subframes of the consecutive retransmission MPDUs and at least 6 bits of correctly received information adjacent to and after the A-MPDU subframe of the retransmission MPDU or the plurality of A-MPDU subframes of the consecutive retransmission MPDUs.
In a second manner, the receive end learns, by using an end state location indication, end states of BCC encoding performed on an A-MPDU subframe including a retransmission MPDU.
In a third manner, a MAC layer of the receive end searches for an MPDU delimiter (the MPDU delimiter is 4 bytes, including MPDU length indication information; and in addition, an A-MPDU subframe includes an integer multiple of 4 bytes) in first 4 bytes of each A-MPDU subframe through each 4-byte sliding window, so as to obtain a length (optionally included) of an A-MPDU subframe including a retransmission MPDU and a total length (optionally included) of a plurality of A-MPDU subframes including consecutive retransmission MPDUs. If the entire A-MPDU is incorrect, the receive end may calculate a total length of all A-MPDU subframes based on a length field in an L-SIG field in a legacy preamble (a non-HT preamble) and a fixed preamble length of a PPDU. When the A-MPDU is retransmitted, initial states and end states used for BCC encoding are all 0s. The MAC layer feeds back information about the initial states and the end states to a physical layer for BCC decoding.

Similarly, if the third manner is used, the receive end may not use a retransmission indication and/or a retransmission length indication to obtain the end states. Therefore, the physical preamble of the PPDU may alternatively not include the retransmission indication and/or the retransmission length indication. However, in this case, an order of the N A-MPDU subframes in the first A-MPDU is the same as an order of the N A-MPDU subframes in the second A-MPDU.

The receive end performs decoding based on the initial states and the end states to obtain an A-MPDU subframe corresponding to a to-be-retransmitted MPDU or A-MPDU subframes corresponding to consecutive to-be-retransmitted MPDUs and at least first 6 bits of correctly received information thereafter. The receive end deletes the at least first 6 bits of information to obtain the A-MPDU subframe corresponding to the to-be-retransmitted MPDU or the A-MPDU subframes corresponding to the consecutive to-be-retransmitted MPDUs. For example, as shown in FIG. 12d, the receive end performs decoding on the first part of BCC coded bits to obtain A-MPDU subframes 1 and 2 and the at least first 6 bits in A-MPDU subframe 3, and deletes the at least first 6 bits in A-MPDU subframe 3 to obtain A-MPDU subframes 1 and 2. The receive end performs decoding on the second part of BCC coded bits to obtain A-MPDU subframe 4 and at least first 6 bits of A-MPDU subframe 5, and deletes the at least first 6 bits to obtain A-MPDU subframe 4.

Optionally, decoding methods that supports HARQ include the following.

For HARQ CC, the receive end may perform combined decoding on LLRs of BCC coded bits of an A-MPDU subframe including a retransmission MPDU and LLRs of BCC coded bits of an A-MPDU subframe including a previously incorrectly received MPDU.

For HARQ IR, the receive end may perform joint decoding on LLRs of BCC coded bits of an A-MPDU subframe including a retransmission MPDU and LLRs of BCC coded bits of an A-MPDU subframe including a previously incorrectly received MPDU. For example, a BCC code (which is obtained by puncturing BCC coded bits at a code rate of 1/2 in a mother codebook) at a code rate of 5/6 in an existing Wi-Fi protocol is used for transmission performed at the first time. BCC coded bits for retransmission performed at the second time are also obtained by puncturing the BCC coded bits at the code rate of 1/2 in the mother codebook. The BCC coded bits obtained at the two times may form a BCC code at another code rate, for example, a BCC code at a code rate of 3/4. The BCC code at the code rate of 3/4 may be different from a BCC code at the code rate of 3/4 used in the existing Wi-Fi protocol.

Based on whether each MPDU in the received second A-MPDU is correctly received, the receive end may perform acknowledgment feedback for each MPDU in the second A-MPDU in manners including no reply, a NACK, an ACK, a block ACK, a multi-STA block ACK, and the like.

Initial states of a retransmission A-MPDU subframe are information bits of an adjacent A-MPDU subframe and are the same as initial states for priorly transmitting the A-MPDU subframe. Therefore, the receive end is enabled to perform combined decoding and joint decoding on LLRs of priorly transmitted coded bits and LLRs of retransmitted coded bits. This implements support for HARQ of an A-MPDU structure in a WLAN, and improves transmission reliability of a WLAN system.

Embodiment 8 corresponds to the second process. Embodiment 8 differs from Embodiment 7 in that, the transmit end performs scrambling before coding on a first A-MPDU, and also performs scrambling before coding on a second A-MPDU. Therefore, BCC encoding is performed on N scrambled A-MPDU subframes in prior transmission, and is also performed on the N scrambled A-MPDU subframes in retransmission. Correspondingly, the receive end performs decoding before descrambling. Because information bits are scrambled and then encoded, in an example, a retransmission scrambling sequence needs to be the same as a prior-transmission scrambling sequence.

FIG. 14 shows yet another retransmitted data sending method. The method includes the following steps.

S801. Send a scrambled first A-MPDU, where the scrambled first A-MPDU includes M scrambled A-MPDU subframes, and M is greater than or equal to 1.

Before sending the scrambled first A-MPDU, the method includes: generating a first A-MPDU, and scrambling the first A-MPDU by using a prior-transmission scrambling sequence to obtain the scrambled first A-MPDU; and further performing BCC encoding on the first A-MPDU by using prior-transmission encoding parameters to obtain coded bits, including priorly transmitted coded bits obtained by performing the BCC encoding on N A-MPDU subframes in the first A-MPDU by using the prior-transmission encoding parameters.

The first A-MPDU is carried in a data field of a first PPDU, and the first PPDU further includes a physical preamble.

S802. Determine N MPDUs in the first A-MPDU that need to be retransmitted, where the N MPDUs are respectively included in N A-MPDU subframes of the M A-MPDU subframes; and N is greater than or equal to 1, and M is greater than or equal to N.

For S802, refer to step S202 described above. Details are not described herein again.

S803. Send a second A-MPDU, where the second A-MPDU includes the N A-MPDU subframes.

The N retransmission MPDUs include at least one of a first-type retransmission MPDU and second-type retransmission MPDUs. Initial states of BCC encoding performed on an A-MPDU subframe of the first-type retransmission MPDU or A-MPDU subframes of the second-type retransmission MPDUs in the N A-MPDU subframes are at least last 6 scrambled bits of a correctly received A-MPDU subframe before the A-MPDU subframe of the first-type retransmission MPDU or the A-MPDU subframes of the second-type retransmission MPDUs in the first A-MPDU. End states of the BCC encoding performed on the A-MPDU subframe of the first-type retransmission MPDU or the A-MPDU subframes of the second-type retransmission MPDUs in the N A-MPDU subframes are at least first 6 scrambled bits of a correctly received A-MPDU subframe after the A-MPDU subframe of the first-type retransmission MPDU or the A-MPDU subframes of the second-type retransmission MPDUs in the first A-MPDU.

Before sending the scrambled second A-MPDU, the method includes: generating a second A-MPDU, and scrambling the second A-MPDU by using a scrambling sequence to obtain the scrambled second A-MPDU; and further performing BCC encoding on the second A-MPDU to obtain coded bits, including retransmitted coded bits obtained by performing the BCC encoding on the N A-MPDU subframes in the second A-MPDU by using retransmission encoding parameters. In addition to the N retransmission MPDUs, the second A-MPDU optionally further includes another non-retransmission MPDU. Therefore, the encoded bits may further include coded bits obtained by performing BCC encoding on an A-MPDU subframe of the another non-retransmission MPDU by using new-transmission encoding parameters. The N A-MPDU subframes including the N retransmission MPDUs are located at a preset location in the second A-MPDU, for example, located at a start location, a middle location, or an end location in the second A-MPDU. Because an A-MPDU may include one or more of a management frame, a control frame, and a data frame, if only the data frame supports HARQ transmission, a retransmission MPDU only needs to be placed at a preset location in each data frame, for example, a start location, a middle location, or an end location. The preset location may be stipulated by a protocol, specified by an AP, or determined by negotiation between an AP and a STA. Optionally, an order of the N A-MPDU subframes in the second A-MPDU is the same as an order of the N A-MPDU subframes in the first A-MPDU.

The N retransmission MPDUs include at least one of a first-type retransmission MPDU and second-type retransmission MPDUs. When the N retransmission MPDUs are retransmitted, the BCC encoding is separately performed on the A-MPDU subframe including the first-type retransmission MPDU and the A-MPDU subframes including the second-type retransmission MPDUs. Regardless of which type of retransmission MPDU, the initial states and the end states of the BCC encoding after scrambling are respectively at least 6 bits of correctly received scrambled information adjacent to and before the first-type or second-type retransmission MPDU and at least 6 bits of correctly received scrambled information adjacent to and after the first-type or second-type retransmission MPDU. The at least 6 correctly received adjacent bits before the retransmission MPDU and those after the retransmission MPDU are respectively included in correctly received A-MPDU subframes, where the correctly received A-MPDU subframes are respectively located before and adjacent to the A-MPDU subframe including the retransmission MPDU and after and adjacent to the A-MPDU subframe including the retransmission MPDU. BCC encoding parameters used for each of retransmission and prior transmission may include a code rate and a generator polynomial matrix, and optionally further include a puncturing mode. Optionally, the retransmission encoding parameters and the prior-transmission encoding parameters are the same or are in a preset relationship.

In this embodiment of this application, the physical preamble of the first PPDU including the first A-MPDU and a physical preamble of a second PPDU including the second A-MPDU each may include one or more types of the indication information in Embodiment 6. Details are not described herein again. Optionally, the PPDU in this embodiment of this application may further include a scrambler seed indication, used to indicate a scrambler seed used for scrambling a retransmission MPDU.

The transmit end scrambles and then encodes information bits included in an A-MPDU. Therefore, optionally, the prior-transmission scrambling sequence is the same as a retransmission scrambling sequence, to enable the receive end to perform combined decoding and joint decoding.

Initial states for retransmitting a scrambled A-MPDU subframe are scrambled information bits of a correctly received adjacent A-MPDU subframe and are the same as initial states for priorly transmitting the A-MPDU subframe. Therefore, the receive end is enabled to perform combined decoding and joint decoding on LLRs of priorly transmitted coded bits and LLRs of retransmitted coded bits. This implements support for HARQ of an A-MPDU structure in a WLAN, and improves transmission reliability of a WLAN system.

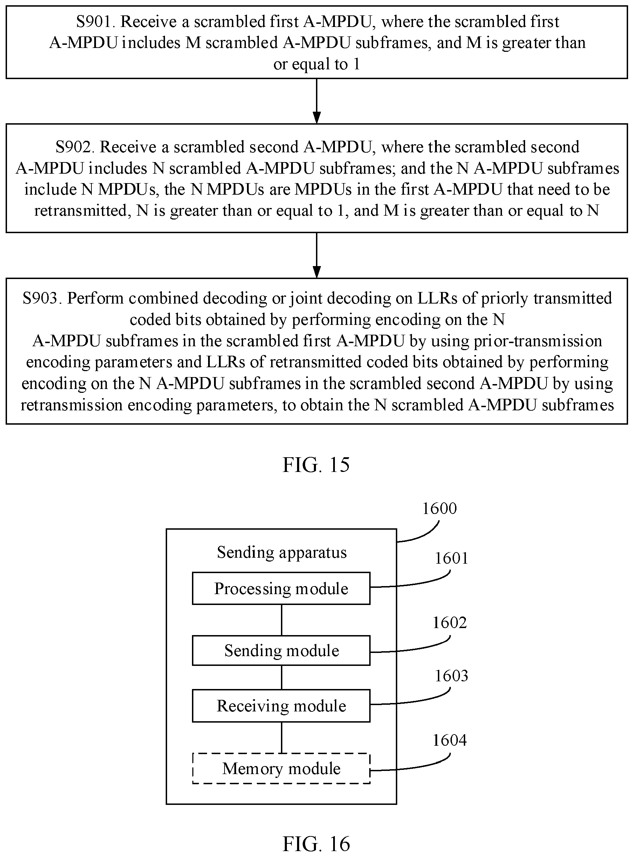

With respect to the foregoing second process (that is, the transmit end performs scrambling before coding, and correspondingly the receive end performs decoding before descrambling), Embodiment 9 describes in detail a retransmitted data receiving method provided in FIG. 15 in an embodiment of this application, to improve transmission reliability and transmission efficiency of a wireless communications system. Because information bits are scrambled and then encoded, in an example, a retransmission scrambling sequence needs to be the same as a prior-transmission scrambling sequence. Embodiment 9 corresponds to Embodiment 8. The method includes the following steps.

S901. Receive a scrambled first A-MPDU, where the scrambled first A-MPDU includes M scrambled A-MPDU subframes, and M is greater than or equal to 1.

Before sending the scrambled first A-MPDU, the method includes: generating a first A-MPDU, and scrambling the first A-MPDU by using a prior-transmission scrambling sequence to obtain the scrambled first A-MPDU; and further performing BCC encoding on the first A-MPDU by using prior-transmission encoding parameters to obtain encoded bits, including priorly transmitted coded bits obtained by performing the BCC encoding on N A-MPDU subframes in the first A-MPDU by using the prior-transmission encoding parameters.

The receive end determines N MPDUs in the first A-MPDU that need to be retransmitted, where the N MPDUs are respectively included in N A-MPDU subframes of the M A-MPDU subframes; and N is greater than or equal to 1, and M is greater than or equal to N. For details, refer to step S202 described above. The details are not described herein again.

S902. Receive a second A-MPDU, where the second A-MPDU includes N A-MPDU subframes.

Initial states of BCC encoding performed on an A-MPDU subframe of a first-type retransmission MPDU or A-MPDU subframes of second-type retransmission MPDUs in the N A-MPDU subframes are at least last 6 scrambled bits of a correctly received A-MPDU subframe before the A-MPDU subframe of the first-type retransmission MPDU or the A-MPDU subframes of the second-type retransmission MPDUs in the first A-MPDU. End states of the BCC encoding performed on the A-MPDU subframe of the first-type retransmission MPDU or the A-MPDU subframes of the second-type retransmission MPDUs in the N A-MPDU subframes are at least first 6 scrambled bits of a correctly received A-MPDU subframe after the A-MPDU subframe of the first-type retransmission MPDU or the A-MPDU subframes of the second-type retransmission MPDUs in the first A-MPDU.

S903. Perform combined decoding or joint decoding on LLRs of priorly transmitted coded bits obtained by performing encoding on N A-MPDU subframes in the first A-MPDU by using prior-transmission encoding parameters and LLRs of retransmitted coded bits obtained by performing encoding on the N A-MPDU subframes in the second A-MPDU by using retransmission encoding parameters, to obtain the N scrambled A-MPDU subframes.

The receive end may obtain, in a plurality of manners, the end states of the BCC encoding performed on the N A-MPDU subframes. For details, refer to the several manners in step S703. The details are not described herein again.

The receive end performs combined decoding or joint decoding on LLRs of coded bits of an A-MPDU subframe including a retransmission MPDU and LLRs of coded bits of an A-MPDU subframe including the priorly transmitted MPDU; and optionally, performs decoding on coded bits of an A-MPDU subframe including a new-transmission MPDU by using a method specified in an existing 802.11 protocol.

The receive end performs decoding based on the initial states and the end states to obtain the N scrambled A-MPDU subframes and at least 6 bits of correctly received scrambled information thereafter. In an example, the receive end deletes the at least 6 bits of scrambled information to obtain the N scrambled A-MPDU subframes, and obtains the N A-MPDU subframes after descrambling, so as to obtain the N retransmission MPDUs. In another example, the receive end descrambles the N scrambled A-MPDU subframes and the at least 6 scrambled bits, and then deletes the at least 6 bits of information to obtain the N A-MPDU subframes, so as to obtain the N retransmission MPDUs.

During scrambling of the A-MPDU subframes including the retransmission MPDUs, information bits obtained through combining decoding or joint decoding are descrambled by using a scrambling sequence same as that for the A-MPDU subframes including the priorly transmitted MPDUs, so as to obtain the N A-MPDU subframes. During descrambling of the A-MPDU subframe including the new-transmission MPDU, a decoded A-MPDU subframe including the new-transmission MPDU is descrambled in a manner similar to that in the existing 802.11 protocol. For example, a service field is used to obtain a scrambler seed, that is, a corresponding periodic scrambling sequence, and then descrambling is performed.

Based on whether each MPDU in the received second A-MPDU is correctly received, the receive end may perform acknowledgment feedback for each MPDU in the second A-MPDU in manners including no reply, a NACK, an ACK, a block ACK, a multi-STA block ACK, and the like.

Initial states of a retransmission A-MPDU subframe are scrambled information bits of an adjacent A-MPDU subframe and are the same as initial states for priorly transmitting the A-MPDU subframe. Therefore, the receive end is enabled to perform combined decoding and joint decoding on LLRs of priorly transmitted coded bits and LLRs of retransmitted coded bits. This implements support for HARQ of an A-MPDU structure in a WLAN, and improves transmission reliability of a WLAN system.

Embodiment 10 provides a retransmission signaling indication method. The method includes: sending a physical protocol data unit PPDU, where the PPDU includes a physical preamble and a data field, the data field includes an A-MPDU, the A-MPDU includes at least one retransmission MPDU and/or at least one non-retransmission MPDU, and the physical preamble includes a plurality of types of retransmission indication information. Correspondingly, the receive end receives the PPDU, and parses the PPDU based on the plurality of types of retransmission indication information.

Optionally, the preamble of the PPDU includes:
Retransmission indication: used to indicate whether the PPDU includes a retransmission MPDU. Herein, there may be one or more retransmission MPDUs. For example, if the MPDU retransmission indication is set to a first value, the first value is used to indicate that the PPDU includes a retransmission MPDU, or if the MPDU retransmission indication is set to a second value, the second value indicates that the PPDU does not include a retransmission PPDU. An MPDU that needs to be retransmitted may be an MPDU that is unsuccessfully received in prior transmission, and is used for HARQ transmission. The receive end performs combined decoding or joint decoding on the LLRs of the retransmission MPDU and the LLRs of the corresponding MPDU that previously fails to be transmitted. A non-retransmission MPDU (or referred to as a new-transmission MPDU) may be an MPDU successfully received in the prior transmission, and may further include a retransmission MPDU for ARQ transmission. Although this MPDU is retransmitted, the receive end does not need to perform corresponding HARQ receiving processing on the retransmission MPDU. Optionally, the receive end that receives the retransmission indication may determine whether to perform combined decoding or joint decoding on the HARQ LLRs of the retransmission MPDU in the current PPDU and the HARQ LLRs of the corresponding MPDU that is previously incorrectly received.

Optionally, the preamble of the PPDU includes a modulation and coding scheme indication. If the modulation and coding scheme indication is a special value, the special value is used to indicate that the PPDU includes only a retransmission MPDU. Herein, there may be one or more retransmission MPDUs. If all MPDUs included in the A-MPDU are retransmission MPDUs, a special data modulation and coding scheme may be used in the physical preamble for indication, and the special modulation and coding scheme indication is set to a special value, for example, an unused value or a currently undefined value. Currently, a modulation and coding scheme in 802.11ax is represented by 4 bits. Modulation and coding schemes 0 to 11 have been used currently, and modulation and coding schemes 12 to 15 are unused. Therefore, the special value may be 12 to 15.

Optionally, the preamble of the PPDU includes a retransmission length indication, used to indicate a total length of A-MPDU subframes including retransmission MPDUs in the PPDU. The total length is in a unit of byte. Alternatively, the retransmission length indication indicates total duration of the A-MPDU subframes including the retransmission MPDUs. It should be noted that, the total length may be a virtual total length, or may be a length obtained through calculation based on transmission duration and a minimum transmission rate.

Optionally, the preamble of the PPDU includes a tail bit location indication, used to indicate a location of a tail bit part corresponding to a last A-MPDU subframe in the A-MPDU corresponding to the retransmission MPDUs. Optionally, if the retransmission indication indicates that the PPDU does not include a retransmission MPDU, the tail bit part location indication may be omitted, or may be set to a reserved value. If the retransmission indication indicates that the PPDU includes a retransmission MPDU, the tail bit part location indication is used to indicate the location of the tail bit part corresponding to the last A-MPDU subframe in the A-MPDU subframes corresponding to the retransmission MPDUs. The retransmission length indication and/or a retransmission tail bit indication may help the receive end obtain a tail bit location, and help the receive end perform decoding.

Optionally, the preamble of the PPDU includes an end state location indication, used to indicate end states of the BCC encoding performed on an A-MPDU subframe of a first-type retransmission MPDU and/or A-MPDU subframes of second-type retransmission MPDUs in the N A-MPDU subframes, that is, a location of at least 6 information bits additionally transmitted during the BCC encoding when the A-MPDU subframe including the first-type retransmission MPDU or the A-MPDU subframes including the second-type retransmission MPDUs are retransmitted, and the at least 6 information bits have been correctly received. The at least 6 information bits are at least first 6 bits in a correctly received A-MPDU subframe after the A-MPDU subframe including the first-type retransmission MPDU or the A-MPDU subframes including the second-type retransmission MPDUs. Optionally, if the retransmission indication indicates that the PPDU does not include a retransmission MPDU, the end state location indication may be omitted, or may be set to a reserved value. If the retransmission indication indicates that the PPDU includes a retransmission MPDU, the end state location indication is used to indicate an end state location corresponding to each of the N A-MPDU subframes corresponding to retransmission of the N MPDUs. It should be noted that, the end state location indication needs to indicate end states of each first-type retransmission MPDU and each second-type MPDU.

Optionally, the preamble of the PPDU includes a scrambler seed indication, used to indicate a scrambler seed used for scrambling a retransmission MPDU.

An A-MPDU subframe corresponding to a retransmission MPDU needs to be placed at a preset location in the A-MPDU included in the PPDU, for example, a start location, a middle location, or an end location. Because an A-MPDU may include one or more of a management frame, a control frame, and a data frame, if only the data frame supports HARQ transmission, a retransmission MPDU only needs to be placed at a preset location in each data frame or before all other A-MPDU subframes, for example, a start location, a middle location, or an end location. The preset location may be stipulated by a protocol, specified by an AP, or determined by negotiation between an AP and a STA. In another implementation, an A-MPDU subframe corresponding to a retransmission MPDU is placed after an existing PPDU preamble and before a service field. It should be noted that, fields included before and after an existing PPDU are successively a physical preamble, a service field, and an A-MPDU, and optionally, further include a physical layer padding bit and a packet extension.

It should be noted that, the solution in Embodiment 10 may be used as an independent embodiment, may be applied to the solutions in Embodiment 1 to Embodiment 9, or may be combined with another implementation.

Embodiment 11 provides a method for constructing a second A-MPDU, where the second A-MPDU includes an A-MPDU subframe corresponding to a retransmission MPDU, and further includes an A-MPDU subframe corresponding to a non-retransmission MPDU.
1. BCC encoding parameters used for performing BCC encoding on the A-MPDU subframe including the retransmission MPDU may be different from encoding parameters used for performing BCC encoding on the A-MPDU subframe including the new-transmission MPDU. The encoding parameters include a code rate and a generator polynomial (or a generator polynomial matrix), and optionally include a puncturing mode.

Only one generator polynomial is specified for BCCs in an actual product, for example, a generator polynomial for BCCs at a specified code rate of 1/2 in the 802.11 series. Other code rates are implemented through punching on this basis. However, in academic theories, different code rates may correspond to different generator polynomials. Therefore, a generator polynomial is further needed.

2. For HARQ CC, a code rate and a puncturing mode used for the A-MPDU subframe including the retransmission MPDU are the same as a code rate and a puncturing mode used for an A-MPDU subframe including the priorly transmitted MPDU. For HARQ IR, a code rate and a puncturing mode used for the A-MPDU subframe including the retransmission MPDU are different from a code rate and a puncturing mode used for an A-MPDU subframe including the priorly transmitted MPDU. However, coded bits may be considered as different parts of BCC coded bits at a low code rate.

FIG. 16 is a schematic diagram of a structure of a sending apparatus according to an embodiment of this application. The sending apparatus may be applied to a transmit end or a chip inside the transmit end. The sending apparatus 1600 includes a processing module 1601, a sending module 1602, and a receiving module 1603.

In an implementation, the sending apparatus may be configured to perform any function of the transmit end in any one of Embodiment 1, Embodiment 2, Embodiment 4, Embodiment 6, and Embodiment 8, for example:

The processing module 1601 is configured to determine that N MPDUs included in N A-MPDU subframes in a first A-MPDU need to be retransmitted, for example, configured to perform S202, S402, S602, or S802 described above. The processing module 1601 is further configured to perform encoding on the first A-MPDU, or the processing module 1601 is further configured to perform encoding on a second A-MPDU.

The sending module 1602 is configured to send the first A-MPDU or the second A-MPDU, for example, configured to indicate S101, S103, S201, S203, S401, S403, S601, S603, S801, or S803.

The receiving module 1603 is configured to receive acknowledgment feedback information, where the acknowledgment feedback information is used to indicate which MPDU in the A-MPDU is unsuccessfully received. For example, the receiving module 1603 is configured to perform S102.

Optionally, the sending apparatus 1600 further includes a storage module 1604, configured to store instructions.

In another embodiment, the sending apparatus may be configured to perform any function of the transmit end in Embodiment 10 described above.

The processing module 1601 is configured to generate a physical protocol data unit PPDU, where the PPDU includes a physical preamble and a data field, the data field includes an A-MPDU, the A-MPDU includes at least one retransmission MPDU and at least one non-retransmission MPDU, and the physical preamble includes indication information for supporting HARQ transmission.

The sending module 1602 is configured to send the physical protocol data unit PPDU.

In this embodiment of this application, the data transmission apparatus shown in FIG. 16 is used as an example to describe each module in the data transmission apparatus applied to the transmit end. It should be understood that, the sending apparatus applied to the transmit end in this embodiment of this application has any function of the transmit end in the retransmitted data sending method shown in any one of Embodiment 1, Embodiment 2, Embodiment 4, Embodiment 6, Embodiment 8, or Embodiment 10.

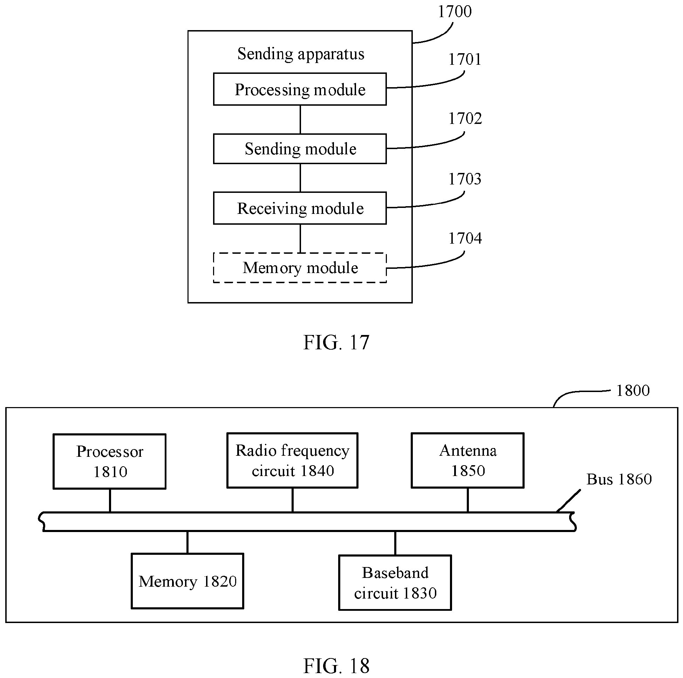

FIG. 17 is a schematic diagram of a structure of a receiving apparatus according to an embodiment of this application. The receiving apparatus 1700 may be applied to a receive end or a chip inside the receive end. The receiving apparatus 1700 includes a processing module 1701, a sending module 1702, and a receiving module 1703.

In an implementation, the receiving apparatus may be configured to perform any function of the receive end in any one of Embodiment 1, Embodiment 3, Embodiment 5, Embodiment 7, and Embodiment 9, for example:
The processing module 1701 is configured to determine that N MPDUs included in N A-MPDU subframes in a first A-MPDU need to be retransmitted. The processing module 1701 is further configured to perform combined decoding or joint decoding on LLRs of retransmitted coded bits and LLRs of priorly transmitted coded bits to obtain the N A-MPDU subframes. For example, the processing module 1701 is configured to perform S104, S303, S503, S703, or S903.

The sending module 1702 is configured to send an acknowledgment feedback frame. For example, the sending module 1702 is configured to perform S102. The acknowledgment feedback is used to indicate which MPDU in the A-MPDU is unsuccessfully received.

The receiving module 1703 is configured to receive the first A-MPDU and a second A-MPDU, for example, configured to receive information sent in S102 and S103, or perform S301 or S302, or perform S501 or S502, or perform S701 or S702, or perform S901 or S902.

Optionally, the receiving apparatus 1700 further includes a storage module 1704, configured to store the LLRs corresponding to the priorly transmitted coded bits, and optionally further configured to store instructions.

In another embodiment, the sending apparatus may be configured to perform any function of the receive end in Embodiment 10 described above.

The processing module 1701 is configured to parse a physical protocol data unit PPDU, where the PPDU includes a physical preamble and a data field, the data field includes an A-MPDU, the A-MPDU includes at least one retransmission MPDU and at least one non-retransmission MPDU, and the physical preamble includes indication information for supporting HARQ transmission.

The receiving module 1703 is configured to receive the physical protocol data unit PPDU.

For the retransmission indication information for supporting HARQ, refer to specific description in Embodiment 10 or Embodiment 1. Details are not described herein again.

In this embodiment of this application, the data transmission apparatus shown in FIG. 17 is used as an example to describe each module in the data transmission apparatus applied to the receive end. It should be understood that, the receiving apparatus applied to the receive end in this embodiment of this application has any function of the receive end in any one of Embodiment 1, Embodiment 3, Embodiment 5, Embodiment 7, Embodiment 9, and Embodiment 10.

The sending apparatus (applied to the transmit end) or the receiving apparatus (applied to the receive end) provided in the embodiment of this application may be implemented in a plurality of product forms. For example, the sending apparatus or the receiving apparatus may be configured as a general-purpose processing system. For example, the sending apparatus or the receiving apparatus may be implemented by a general bus system structure. For example, the sending apparatus or the receiving apparatus may be implemented by using an application-specific integrated circuit (application-specific integrated circuit, ASIC). The following provides several possible product forms of the data transmission apparatus in the embodiments of this application. It should be understood that the following is merely an example, and the possible product forms in the embodiments of this application are not limited thereto.

In an example, FIG. 18 is a schematic block diagram of a sending apparatus 1800 according to an embodiment of this application. The apparatus 1800 in this embodiment of this application may be the transmit end in any one of the foregoing method embodiments, or may be one or more chips inside the transmit end. The apparatus 1800 may be configured to perform some or all functions of the access point in the foregoing method embodiment.

The apparatus 1800 may be configured to perform some or all functions of the access point in the foregoing method embodiment. The apparatus 1800 may include a processor 1810, a baseband circuit 1830, a radio frequency circuit 1840, and an antenna 1850. Optionally, the apparatus 1800 may further include a memory 1820. Components of the apparatus 1800 are coupled together by a bus 1860. In addition to a data bus, the bus system 1860 further includes a power bus, a control bus, and a status signal bus. However, for clear description, various types of buses in the figure are marked as the bus system 1860.

The processor 1810 may be configured to control the transmit end, and configured to perform processing performed by the transmit end in the foregoing embodiment. The processor 1810 may perform a processing process related to the transmit end in the foregoing method embodiment and/or configured to perform another process of the technology described in this application. Further, the processor 1810 may run an operating system, be responsible for managing the bus, and execute a program or an instruction stored in the memory.

The baseband circuit 1830, the radio frequency circuit 1840, and the antenna 1850 may be configured to support information receiving and sending between the transmit end and the receive end in the foregoing embodiments, so as to support wireless communication between the transmit end and the receive end.

In an example, at the transmit end, the processor 1810 processes a retransmission MPDU or a prior-transmission MPDU; the baseband circuit 1830 encapsulates the MPDU into an A-MPDU based on a protocol, and then performs processing such as scrambling and encoding; further, the radio frequency circuit 1840 performs radio frequency processing such as analog conversion, filtering, amplification, and up-conversion; and the antenna 1850 transmits the A-MPDU. In another example, the antenna 1850 receives acknowledgment feedback information sent by the receive end; the radio frequency circuit 1840 performs processing such as filtering, amplification, down-conversion, and digitization; the baseband circuit 1830 performs baseband processing such as decoding and protocol-based data decapsulation; and the processor 1810 performs processing to restore the acknowledgment feedback information sent by the receive end.

The memory 1820 may be configured to store program code and data of a transmit end, and the memory 1820 may be the storage module 1830 in FIG. 18. It can be understood that the baseband circuit 1830, the radio frequency circuit 1840, and the antenna 1850 may be further configured to support communication between the transmit end and another network entity, for example, communication between the transmit end and a network element on a core network side. As shown in FIG. 18, the memory 1820 is separated from the processor 1810. However, it is readily figured out by a person skilled in the art that the memory 1820 or any part thereof may be located outside the channel resource allocation apparatus 1800. For example, the memory 1820 may include a transmission cable and/or a computer product separated from a wireless node. These media may be accessed by the processor 1810 by using the bus interface 1860. Alternatively, the memory 1820 or any portion thereof may be integrated into the processor 1810, for example, may be a cache and/or a general purpose register.

It may be understood that, FIG. 18 shows only a simplified design of the transmit end. For example, in actual application, the transmit end may include any quantity of transmitters, receivers, processors, memories, and the like, and all transmit ends that can implement the present invention fall within the protection scope of the present invention.

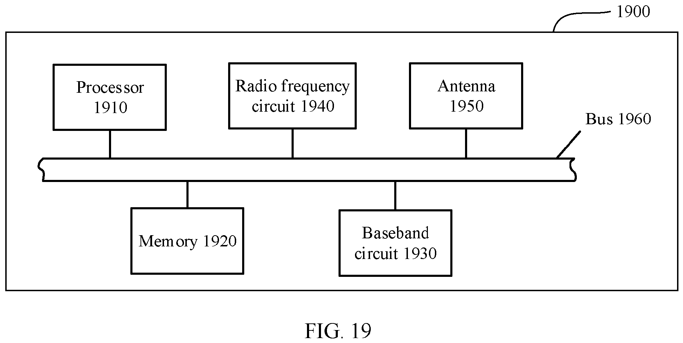

This embodiment of this application describes a schematic structure of a receiving apparatus in detail. In an example, FIG. 19 is a schematic block diagram of a receiving apparatus 1900 according to an embodiment of this application. The apparatus 1900 in this embodiment of this application may be the receive end in any one of the foregoing method embodiments, or may be one or more chips inside the receive end. The apparatus 1900 may be configured to perform some or all functions of the access point in the foregoing method embodiment.

The apparatus 1900 may be configured to perform some or all functions of the receive end in any one of the foregoing method embodiments. The apparatus 1900 may include a processor 1910, a baseband circuit 1930, a radio frequency circuit 1940, and an antenna 1950. Optionally, the apparatus 1900 may further include a memory 1920. Components of the apparatus 1900 are coupled together through a bus 1960. In addition to a data bus, the bus system 1960 includes a power bus, a control bus, and a status signal bus. However, for clear description, various types of buses in the figure are marked as the bus system 1960.

The processor 1910 may be configured to control the receive end, and configured to perform processing performed by the receive end in the foregoing embodiment. The processor 1910 may perform a processing process related to the receive end in the foregoing method embodiment and/or configured to perform another process of the technology described in this application. Further, the processor 1910 may run an operating system, be responsible for managing the bus, and execute a program or an instruction stored in the memory.

The baseband circuit 1930, the radio frequency circuit 1940, and the antenna 1950 may be configured to support information receiving and sending between the receive end and the transmit end in the foregoing embodiments, so as to support wireless communication between the receive end and the transmit end. In an example, the antenna 1950 receives a signal sent from the transmit end; the radio frequency circuit performs processing such as filtering, amplification, down-conversion, and digitization; then, the baseband circuit performs baseband processing such as decoding and protocol-based data decapsulation; and the processor 1910 performs processing to restore service data and signaling information that are sent by the transmit end. For example, the receive end decodes and decapsulates a received PPDU to obtain an A-MPDU, and then parses the A-MPDU by using the processor to obtain a retransmission MPDU or a new-transmission MPDU. In still another example, the processor 1910 processes acknowledgment feedback information of the receive end; the baseband circuit 1930 performs baseband processing such as protocol-based encapsulation and encoding; further, the radio frequency circuit 1940 performs radio frequency processing such as analog conversion, filtering, amplification, and up-conversion; and the antenna 1950 transmits the acknowledgment feedback information. The memory 1920 may be configured to store program code and data of the transmit end, and the memory 1920 may be a storage module. It can be understood that the baseband circuit 1930, the radio frequency circuit 1940, and the antenna 1950 may be further configured to support communication between the station and another network entity.

It may be understood that, FIG. 19 shows only a simplified design of the receive end. For example, in actual application, the receive end may include any quantity of transmitters, receivers, processors, memories, and the like, and all receive ends that can implement the present invention fall within the protection scope of the present invention. The processors in the apparatus 1800 and the apparatus 1900 may be general-purpose processors such as general-purpose central processing units (CPU), network processors (Network Processor, NP for short), or microprocessors, or may be application-specific integrated circuits (application-specific integrated circuit, ASIC for short), or one or more integrated circuits configured to control program execution in the solutions of this application. The processor may also be a digital signal processor (Digital Signal Processor, DSP for short), a field-programmable gate array (Field-Programmable Gate Array, FPGA for short) or another programmable logic device, a discrete gate or a transistor logic device, or a discrete hardware component. Alternatively, a controller/processor may be a combination of processors implementing a computing function, for example, a combination of one or more microprocessors, or a combination of the DSP and the microprocessor. The processor usually performs logical and arithmetic operations according to a program instruction stored in the memory.

The memory in each of the apparatus 1800 and the apparatus 1900 may further store an operating system and another application program. Specifically, the program may include program code, and the program code includes a computer operation instruction. More specifically, the memory may be a read-only memory (read-only memory, ROM for short), another type of static storage device that can store static information and an instruction, a random access memory (random access memory, RAM for short), another type of dynamic storage device that can store information and an instruction, or a magnetic disk storage, or the like. The memory may be a combination of the foregoing memories. In addition, the computer-readable storage medium/memory may be located in the processor, or may be located outside the processor, or distributed in a plurality of entities including the processor or a processing circuit. The computer-readable storage medium/memory may be specifically embodied in a computer program product. For example, the computer program product may include a computer-readable medium in a packaging material.

An embodiment of this application further provides a chip system, where the chip system includes a processor, configured to support a second communications device in implementing the function in any of the foregoing embodiments, for example, generating or processing data and/or information in the foregoing method. In a possible design, the chip system further includes a memory. The memory is configured to store program instructions and data that are necessary for the receive end. The chip system may include a chip, or may include a chip and another discrete component.

An embodiment of this application further provides a processor, configured to be coupled to a memory, and configured to perform the method and the function related to the receive end in any one of the foregoing embodiments.

An embodiment of this application further provides a computer program product including an instruction. When the computer program product runs on a computer, the computer is enabled to perform the method and the function that are related to the transmit end device in any one of the foregoing embodiments.

An embodiment of this application further provides an apparatus, configured to perform a method and a function related to the receive end or the transmit end in any one of the foregoing embodiments.

An embodiment of this application further provides a wireless communications system. The system includes the transmit end and at least one receive end in the foregoing embodiments.

In the several embodiments provided in this application, it should be understood that the disclosed system, apparatus, and method may be implemented in other manners. For example, the described apparatus embodiment is merely an example. For example, division into the units is merely logical function division and may be other division in an actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms. As still another possible product form, the data transmission apparatus may alternatively be implemented by using the following: a field programmable gate array (Field-Programmable Gate Array, FPGA), a programmable logic device (Programmable Logic Device, PLD), a controller, a state machine, gate logic, a discrete hardware component, any other suitable circuit, or any combination of circuits that can perform various functions described in this application.

All or some of the foregoing embodiments may be implemented by using software, hardware, firmware, or any combination thereof. When the software is used to implement the embodiments, all or some of the embodiments may be implemented in a form of a computer program product. The computer program product includes one or more computer instructions. When the computer program instructions are loaded and executed on a computer, the procedures or functions according to this application are all or partially generated. The computer may be a general-purpose computer, a special-purpose computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by a computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state disk (solid state disk)), or the like.

## Claims

1. A retransmitted data sending method, applied to a transmit end, comprising:
sending (S201) a first aggregate Media Access Control protocol data unit, A-MPDU, wherein the first A-MPDU comprises M A-MPDU subframes and M tail bit parts, one tail bit part corresponds to one A-MPDU subframe, and M is greater than or equal to 1;
determining (S202) N MPDUs in the first A-MPDU that need to be retransmitted, wherein the N MPDUs are respectively comprised in N A-MPDU subframes of the first A-MPDU; and N is greater than or equal to 1, and M is greater than or equal to N; and
sending (S203) a second A-MPDU, wherein the second A-MPDU comprises the N A-MPDU subframes and N tail bit parts corresponding to the N A-MPDU subframes;
wherein one tail bit part comprises at least 6 bits, and the at least 6 bits are a preset value, and
wherein the second A-MPDU is carried in a second physical protocol data unit, PPDU, the second PPDU comprises a physical preamble, **characterised in that**:
the physical preamble comprises one or more of the following:
a modulation and coding scheme indication, wherein if the modulation and coding scheme indication is a special value, the special value is used to indicate that the second PPDU comprises only retransmitted MPDUs and does not include a non-retransmission MPDU; and
tail bit part location indication: used to indicate a location of a tail bit part corresponding to a last A-MPDU subframe in the N A-MPDU subframes.

2. The method according to claim 1, wherein the N A-MPDU subframes in the first A-MPDU correspond to priorly transmitted coded bits obtained by performing BCC encoding by using prior-transmission encoding parameters; and the N A-MPDU subframes in the second A-MPDU correspond to retransmitted coded bits obtained by performing BCC encoding by using retransmission encoding parameters; wherein
the retransmission encoding parameters and the prior-transmission encoding parameters are the same or are in a preset relationship.

3. The method according to claim 1, wherein one tail bit part is located in at least last 6 bits in one A-MPDU subframe.

4. The method according to any one of claims 1 to 3, wherein one A-MPDU subframe comprises a padding field, and if the padding field is greater than 0 bytes and less than 4 bytes, the tail bit part is located in at least last 6 bits in the padding field; or
if the padding field comprised in the A-MPDU subframe is 0 bytes, the method further comprises: padding 4 additional bytes to the padding field of the A-MPDU subframe, wherein the tail bit part is located in at least last 6 bits of the 4 additional bytes.

5. The method according to claim 1 or 2, wherein one tail bit part is located in at least 6 bits padded after one A-MPDU subframe.

6. The method according to any one of claims 1 to 5, wherein the tail bit part comprises 6 bits, and a value of the 6 bits is 000000.

7. The method according to any one of claims 1 to 6, wherein the second A-MPDU subframe is carried in the second physical protocol data unit, PPDU, the second PPDU comprises the physical preamble, and the physical preamble further comprises one or more of the following:
a retransmission indication, used to indicate whether the second PPDU comprises a retransmitted MPDU, wherein if the retransmission indication is set to a first value, the first value is used to indicate that the second PPDU comprises a retransmitted MPDU; and
a retransmission length indication, used to indicate a total length or total duration of the N A-MPDU subframes comprised in the second PPDU.

8. A retransmitted data receiving method, applied to a receive end, comprising:
receiving (S301) a first A-MPDU, wherein the first A-MPDU comprises M A-MPDU subframes and M tail bit parts, one tail bit part corresponds to one A-MPDU subframe, and M is greater than or equal to 1;
receiving (S302) a second A-MPDU, wherein the second A-MPDU comprises the N A-MPDU subframes and N tail bit parts corresponding to the N A-MPDU subframes; one tail bit part comprises at least 6 bits, and the at least 6 bits are a preset value; the N A-MPDU subframes comprise N MPDUs in the first A-MPDU that need to be retransmitted; and N is greater than or equal to 1, and M is greater than or equal to N; **characterised by**:
performing (S303) combined decoding or joint decoding on LLRs of priorly transmitted coded bits corresponding to N A-MPDU subframes in the first A-MPDU and LLRs of retransmitted coded bits corresponding to the N A-MPDU subframes in the second A-MPDU, to obtain the N A-MPDU subframes
wherein the second A-MPDU is carried in a second PPDU, the second PPDU comprises a physical preamble, and the physical preamble comprises one or more of the following:
a modulation and coding scheme indication, wherein if the modulation and coding scheme indication is a special value, the special value is used to indicate that the second PPDU comprises only retransmitted MPDUs and does not include a non-retransmission MPDU; and
tail bit part location indication: used to indicate a location of a tail bit part corresponding to a last A-MPDU subframe in the N A-MPDU subframes.

9. The method according to claim 8, wherein the N A-MPDU subframes in the first A-MPDU correspond to the priorly transmitted coded bits obtained by performing BCC encoding by using prior-transmission encoding parameters; and the N A-MPDU subframes in the second A-MPDU correspond to the retransmitted coded bits obtained by performing BCC encoding by using retransmission encoding parameters; wherein
the retransmission encoding parameters and the prior-transmission encoding parameters are the same or are in a preset relationship.

10. The method according to claim 8, wherein one tail bit part is located in at least last 6 bits in one A-MPDU subframe.

11. The method according to any one of claims 8 to 10, wherein one A-MPDU subframe comprises a padding field, and if the padding field is greater than 0 bytes and less than 4 bytes, the tail bit part is located in at least last 6 bits in the padding field; or
if the padding field comprised in the A-MPDU subframe is 0 bytes, the method further comprises: padding 4 additional bytes to the padding field of the A-MPDU subframe, wherein the tail bit part is located in at least last 6 bits of the 4 additional bytes.

12. The method according to claim 8 or 9, wherein one tail bit part is located in at least 6 bits padded after one A-MPDU subframe.

13. The method according to any one of claims 8 to 12, wherein the tail bit part comprises 6 bits, and a value of the 6 bits is 000000.

14. The method according to any one of claims 8 to 13, wherein the second A-MPDU subframe is carried in the second PPDU, the second PPDU comprises the physical preamble, and the physical preamble further comprises one or more of the following:
a retransmission indication, used to indicate whether the second PPDU comprises a retransmitted MPDU, wherein if the retransmission indication is set to a first value, the first value is used to indicate that the PPDU comprises a retransmitted MPDU; and
a retransmission length indication, used to indicate a total length of the N A-MPDU subframes comprised in the second PPDU.

15. A sending apparatus (1600), applied to a transmit end, comprising a memory (1604) and a processor (1601), wherein the memory is coupled to the processor, the memory is configured to store a computer program, and the computer program comprises program instructions; and the processor is configured to invoke the program instructions to implement the method according to any one of claims 1 to 7.

## Patentansprüche

1. Verfahren zum Senden von erneut übertragenen Daten, das auf ein Übertragungsende angewendet wird, umfassend:
Senden (S201) einer ersten aggregierten Medienzugriffssteuerungs-Protokolldateneinheit, A-MPDU, wobei die erste A-MPDU M A-MPDU-Unterrahmen und M Tail-Bit-Teile umfasst, ein Tail-Bit-Teil einem A-MPDU-Unterrahmen entspricht und M größer als oder gleich 1 ist;
Bestimmen (S202) von N MPDUs in der ersten A-MPDU, die erneut zu übertragen sind, wobei die N MPDUs jeweils in N A-MPDU-Unterrahmen der ersten A-MPDU umfasst sind; und wobei N größer als oder gleich 1 ist und M größer als oder gleich N ist; und
Senden (S203) einer zweiten A-MPDU, wobei die zweite A-MPDU die N A-MPDU-Unterrahmen und N Tail-Bit-Teile, die den N A-MPDU-Unterrahmen entsprechen, umfasst;
wobei ein Tail-Bit-Teil mindestens 6 Bits umfasst und die mindestens 6 Bits ein voreingestellter Wert sind, und
wobei die zweite A-MPDU in einer zweiten physikalischen Protokolldateneinheit, PPDU, getragen wird, wobei die zweite PPDU eine physikalische Präambel umfasst, **dadurch gekennzeichnet, dass**:
die physikalische Präambel eines oder mehrere der Folgenden umfasst:
eine Modulations- und Codierungsschemaanzeige, wobei, wenn die Modulations- und Codierungsschemaanzeige ein spezieller Wert ist, der spezielle Wert verwendet wird, um anzuzeigen, dass die zweite PPDU nur erneut übertragene MPDUs umfasst und keine nicht erneut übertragene MPDU beinhaltet; und
Tail-Bit-Teil-Positionsanzeige: verwendet, um eine Position eines Tail-Bit-Teils, das einem letzten A-MPDU-Unterrahmen in den N A-MPDU-Unterrahmen entspricht, anzuzeigen.

2. Verfahren nach Anspruch 1, wobei die N A-MPDU-Unterrahmen in der ersten A-MPDU vorher übertragenen codierten Bits entsprechen, die durch Durchführen einer BCC-Codierung unter Verwendung von Codierungsparametern für vorherige Übertragung erlangt wurden; und die N A-MPDU-Unterrahmen in der zweiten A-MPDU erneut übertragenen codierten Bits entsprechen, die durch Durchführen einer BCC-Codierung unter Verwendung von Codierungsparametern für erneute Übertragung erlangt wurden; wobei
die Codierungsparameter für erneute Übertragung und die Codierungsparameter für vorherige Übertragung die gleichen sind oder in einem voreingestellten Verhältnis stehen.

3. Verfahren nach Anspruch 1, wobei ein Tail-Bit-Teil in mindestens den letzten 6 Bits in einem A-MPDU-Unterrahmen positioniert ist.

4. Verfahren nach einem der Ansprüche 1 bis 3, wobei ein A-MPDU-Unterrahmen ein Füllfeld umfasst und, wenn das Füllfeld größer als 0 Bytes und kleiner als 4 Bytes ist, der Tail-Bit-Teil in mindestens den letzten 6 Bits in dem Füllfeld positioniert ist; oder
wenn das Füllfeld, das in dem A-MPDU-Unterrahmen umfasst ist, 0 Bytes beträgt, das Verfahren ferner Folgendes umfasst: Füllen von 4 zusätzlichen Bytes in das Füllfeld des A-MPDU-Unterrahmens, wobei der Tail-Bit-Teil in mindestens den letzten 6 Bits der 4 zusätzlichen Bytes positioniert ist.

5. Verfahren nach Anspruch 1 oder 2, wobei ein Tail-Bit-Teil in mindestens 6 Bits, gefüllt nach einem A-MPDU-Unterrahmen, positioniert ist.

6. Verfahren nach einem der Ansprüche 1 bis 5, wobei der Tail-Bit-Teil 6 Bits umfasst und ein Wert der 6 Bits 000000 ist.

7. Verfahren nach einem der Ansprüche 1 bis 6, wobei der zweite A-MPDU-Unterrahmen in der zweiten physikalischen Protokolldateneinheit, PPDU, getragen wird, die zweite PPDU die physikalische Präambel umfasst und die physikalische Präambel ferner eines oder mehrere der Folgenden umfasst:
eine erneute Übertragungsanzeige, die verwendet wird, um anzuzeigen, ob die zweite PPDU eine erneut übertragene MPDU umfasst, wobei, wenn die erneute Übertragungsanzeige auf einen ersten Wert eingestellt ist, der erste Wert verwendet wird, um anzuzeigen, dass die zweite PPDU eine erneut übertragene MPDU umfasst; und
eine erneute Übertragungslängenanzeige, die verwendet wird, um eine Gesamtlänge oder eine Gesamtdauer der N A-MPDU-Unterrahmen anzuzeigen, die in der zweiten PPDU umfasst sind.

8. Verfahren zum Empfangen erneut übertragener Daten, das auf ein Empfangsende angewendet wird, umfassend:
Empfangen (S301) einer ersten A-MPDU, wobei die erste A-MPDU M A-MPDU-Unterrahmen und M Tail-Bit-Teile umfasst, ein Tail-Bit-Teil einem A-MPDU-Unterrahmen entspricht und M größer als oder gleich 1 ist;
Empfangen (S302) einer zweiten A-MPDU, wobei die zweite A-MPDU die N A-MPDU-Unterrahmen und N Tail-Bit-Teile, die den N A-MPDU-Unterrahmen entsprechen, umfasst; ein Tail-Bit-Teil mindestens 6 Bits umfasst und die mindestens 6 Bits ein voreingestellter Wert sind; die N A-MPDU-Unterrahmen N MPDUs in der ersten A-MPDU umfassen, die erneut übertragen werden müssen; und N größer als oder gleich 1 ist und M größer als oder gleich N ist;
**gekennzeichnet durch**:
Durchführen (S303) einer kombinierten Decodierung oder gemeinsamen Decodierung auf LLRs von vorher übertragenen codierten Bits, die N A-MPDU-Unterrahmen in der ersten A-MPDU entsprechen, und LLRs von erneut übertragenen codierten Bits, die den N A-MPDU-Unterrahmen in der zweiten A-MPDU entsprechen, um die N A-MPDU-Unterrahmen zu erlangen,
wobei die zweite A-MPDU in einer zweiten PPDU getragen wird, die zweite PPDU eine physikalische Präambel umfasst und die physikalische Präambel eines oder mehrere der Folgenden umfasst:
eine Modulations- und Codierungsschemaanzeige, wobei, wenn die Modulations- und Codierungsschemaanzeige ein spezieller Wert ist, der spezielle Wert verwendet wird, um anzuzeigen, dass die zweite PPDU nur erneut übertragene MPDUs umfasst und keine nicht erneut übertragene MPDU beinhaltet; und
Tail-Bit-Teil-Positionsanzeige: verwendet, um eine Position eines Tail-Bit-Teils, das einem letzten A-MPDU-Unterrahmen in den N A-MPDU-Unterrahmen entspricht, anzuzeigen.

9. Verfahren nach Anspruch 8, wobei die N A-MPDU-Unterrahmen in der ersten A-MPDU vorher übertragenen codierten Bits entsprechen, die durch Durchführen einer BCC-Codierung unter Verwendung von Codierungsparametern für vorherige Übertragung erlangt wurden; und die N A-MPDU-Unterrahmen in der zweiten A-MPDU erneut übertragenen codierten Bits entsprechen, die durch Durchführen einer BCC-Codierung unter Verwendung von Codierungsparametern für erneute Übertragung erlangt wurden; wobei
die Codierungsparameter für erneute Übertragung und die Codierungsparameter für vorherige Übertragung die gleichen sind oder in einem voreingestellten Verhältnis stehen.

10. Verfahren nach Anspruch 8, wobei ein Tail-Bit-Teil in mindestens den letzten 6 Bits in einem A-MPDU-Unterrahmen positioniert ist.

11. Verfahren nach einem der Ansprüche 8 bis 10, wobei ein A-MPDU-Unterrahmen ein Füllfeld umfasst und, wenn das Füllfeld größer als 0 Bytes und kleiner als 4 Bytes ist, der Tail-Bit-Teil in mindestens den letzten 6 Bits in dem Füllfeld positioniert ist; oder
wenn das Füllfeld, das in dem A-MPDU-Unterrahmen umfasst ist, 0 Bytes beträgt, das Verfahren ferner Folgendes umfasst: Füllen von 4 zusätzlichen Bytes in das Füllfeld des A-MPDU-Unterrahmens, wobei der Tail-Bit-Teil in mindestens den letzten 6 Bits der 4 zusätzlichen Bytes positioniert ist.

12. Verfahren nach Anspruch 8 oder 9, wobei ein Tail-Bit-Teil in mindestens 6 Bits, gefüllt nach einem A-MPDU-Unterrahmen, positioniert ist.

13. Verfahren nach einem der Ansprüche 8 bis 12, wobei der Tail-Bit-Teil 6 Bits umfasst und ein Wert der 6 Bits 000000 ist.

14. Verfahren nach einem der Ansprüche 8 bis 13, wobei der zweite A-MPDU-Unterrahmen in der zweiten PPDU getragen wird, die zweite PPDU die physikalische Präambel umfasst und die physikalische Präambel ferner eines oder mehrere der Folgenden umfasst:
eine erneute Übertragungsanzeige, die verwendet wird, um anzuzeigen, ob die zweite PPDU eine erneut übertragene MPDU umfasst, wobei, wenn die erneute Übertragungsanzeige auf einen ersten Wert eingestellt ist, der erste Wert verwendet wird, um anzuzeigen, dass die PPDU eine erneut übertragene MPDU umfasst; und
eine erneute Übertragungslängenanzeige, die verwendet wird, um eine Gesamtlänge der N A-MPDU-Unterrahmen anzuzeigen, die in der zweiten PPDU umfasst sind.

15. Sendevorrichtung (1600), die auf ein Übertragungsende angewendet wird, umfassend einen Speicher (1604) und einen Prozessor (1601), wobei der Speicher mit dem Prozessor gekoppelt ist, der Speicher dazu konfiguriert ist, ein Computerprogramm zu speichern, und das Computerprogramm Programmanweisungen umfasst; und der Prozessor dazu konfiguriert ist, die Programmanweisungen aufzurufen, um das Verfahren nach einem der Ansprüche 1 bis 7 zu implementieren.

## Revendications

1. Procédé d'envoi de données retransmises, appliqué à une extrémité d'émission, comprenant :
l'envoi (S201) d'une première unité de données de protocole de contrôle d'accès à un média agrégé, A-MPDU, dans lequel la première A-MPDU comprend M sous-trames A-MPDU et M parties de bit de queue, une partie de bit de queue correspond à une sous-trame A-MPDU, et M est supérieur ou égal à 1 ;
la détermination (S202) de N MPDU dans la première A-MPDU qui doivent être retransmises, dans lequel les N MPDU sont respectivement comprises dans N sous-trames A-MPDU de la première A-MPDU ; et N est supérieur ou égal à 1, et M est supérieur ou égal à N ; et
l'envoi (S203) d'une seconde A-MPDU, dans lequel la seconde A-MPDU comprend les N sous-trames A-MPDU et N parties de bit de queue correspondant aux N sous-trames A-MPDU ;
dans lequel une partie de bit de queue comprend au moins 6 bits, et les au moins 6 bits sont une valeur prédéfinie, et
dans lequel la seconde A-MPDU est portée dans une seconde unité de données de protocole physique, PPDU, la seconde PPDU comprend un préambule physique, **caractérisé en ce que** :
le préambule physique comprend un ou plusieurs des éléments suivants :
une indication de schéma de modulation et de codage, dans lequel si l'indication de schéma de modulation et de codage est une valeur spéciale, la valeur spéciale est utilisée pour indiquer que la seconde PPDU comprend uniquement des MPDU retransmises et ne comporte pas de MPDU de non-retransmission ; et
une indication de localisation de partie de bit de queue : utilisée pour indiquer une localisation d'une partie de bit de queue correspondant à une dernière sous-trame A-MPDU dans les N sous-trames A-MPDU.

2. Procédé selon la revendication 1, dans lequel les N sous-trames A-MPDU dans les premières A-MPDU correspondent à des bits codés transmis préalablement obtenus en réalisant un codage BCC à l'aide de paramètres de codage de transmission préalable ; et les N sous-trames A-MPDU dans les secondes A-MPDU correspondent à des bits codés retransmis obtenus en réalisant un codage BCC à l'aide de paramètres de codage de retransmission ; dans lequel
les paramètres de codage de retransmission et les paramètres de codage de transmission préalable sont les mêmes ou sont dans une relation prédéfinie.

3. Procédé selon la revendication 1, dans lequel une partie de bit de queue est localisée dans au moins 6 bits dans une sous-trame A-MPDU.

4. Procédé selon l'une quelconque des revendications 1 à 3, dans lequel une sous-trame A-MPDU comprend un champ de remplissage, et si le champ de remplissage est supérieur à 0 octet et inférieur à 4 octets, la partie de bit de queue est située dans au moins 6 bits dans le champ de remplissage ; ou
si le champ de remplissage compris dans la sous-trame A-MPDU est de 0 octet, le procédé comprend également : le remplissage de 4 octets supplémentaires au champ de remplissage de la sous-trame A-MPDU, dans lequel la partie de bit de queue est localisée dans au moins 6 bits des 4 octets supplémentaires.

5. Procédé selon la revendication 1 ou 2, dans lequel une partie de bit de queue est située dans au moins 6 bits remplis après une sous-trame A-MPDU.

6. Procédé selon l'une quelconque des revendications 1 à 5, dans lequel la partie de bit de queue comprend 6 bits, et la valeur des 6 bits est 000000.

7. Procédé selon l'une quelconque des revendications 1 à 6, dans lequel la seconde sous-trame A-MPDU est portée dans la seconde unité de données de protocole physique, PPDU, la seconde PPDU comprend le préambule physique, et le préambule physique comprend également, un ou plusieurs des éléments suivants :
une indication de retransmission, utilisée pour indiquer si la seconde PPDU comprend une MPDU retransmise, dans lequel si l'indication de retransmission est réglée à une première valeur, la première valeur est utilisée pour indiquer que la seconde PPDU comprend une MPDU retransmise ; et
une indication de longueur de retransmission, utilisée pour indiquer une longueur totale ou une durée totale des N sous-trames A-MPDU comprises dans la seconde PPDU.

8. Procédé de réception de données retransmises, appliqué à une extrémité de réception, comprenant :
la réception (S301) d'une première A-MPDU, dans lequel la première A-MPDU comprend M sous-trames A-MPDU et M parties de bit de queue, une partie de bit de queue correspond à une sous-trame A-MPDU, et M est supérieur ou égal à 1 ;
la réception (S302) d'une seconde A-MPDU, dans lequel la seconde A-MPDU comprend les N sous-trames A-MPDU et N parties de bit de queue correspondant aux N sous-trames A-MPDU ; une partie de bit de queue comprend au moins 6 bits, et les au moins 6 bits sont une valeur prédéfinie ; les N sous-trames A-MPDU comprennent N MPDU dans la première A-MPDU qui doivent être retransmises ; et N est supérieur ou égal à 1, et M est supérieur ou égal à N ; **caractérisée par** :
la réalisation (S303) d'un décodage combiné ou d'un décodage conjoint sur des LLR de bits codés transmis précédemment correspondant à N sous-trames A-MPDU dans la première A-MPDU et des LLR de bits codés retransmis correspondant aux N sous-trames A-MPDU dans la seconde A-MPDU, pour obtenir les N sous-trames A-MPDU ;
dans lequel la seconde A-MPDU est portée dans une seconde PPDU, la seconde PPDU comprend un préambule physique, et le préambule physique comprend un ou plusieurs des éléments suivants :
une indication de schéma de modulation et de codage, dans lequel si l'indication de schéma de modulation et de codage est une valeur spéciale, la valeur spéciale est utilisée pour indiquer que la seconde PPDU comprend uniquement des MPDU retransmises et ne comporte pas de MPDU de non-retransmission ; et
une indication de localisation de partie de bit de queue : utilisée pour indiquer une localisation d'une partie de bit de queue correspondant à une dernière sous-trame A-MPDU dans les N sous-trames A-MPDU.

9. Procédé selon la revendication 8, dans lequel les N sous-trames A-MPDU dans les premières A-MPDU correspondent à des bits codés transmis préalablement obtenus en réalisant un codage BCC à l'aide de paramètres de codage de transmission préalable ; et les N sous-trames A-MPDU dans les secondes A-MPDU correspondent à des bits codés retransmis obtenus en réalisant un codage BCC à l'aide de paramètres de codage de retransmission ; dans lequel
les paramètres de codage de retransmission et les paramètres de codage de transmission préalable sont les mêmes ou sont dans une relation prédéfinie.

10. Procédé selon la revendication 8, dans lequel une partie de bit de queue est localisée dans au moins 6 bits dans une sous-trame A-MPDU.

11. Procédé selon l'une quelconque des revendications 8 à 10, dans lequel une sous-trame A-MPDU comprend un champ de remplissage, et si le champ de remplissage est supérieur à 0 octet et inférieur à 4 octets, la partie de bit de queue est située dans au moins 6 bits dans le champ de remplissage ; ou
si le champ de remplissage compris dans la sous-trame A-MPDU est de 0 octet, le procédé comprend également : le remplissage de 4 octets supplémentaires au champ de remplissage de la sous-trame A-MPDU, dans lequel la partie de bit de queue est située dans au moins 6 bits des 4 octets supplémentaires.

12. Procédé selon la revendication 8 ou 9, dans lequel une partie de bit de queue est située dans au moins 6 bits remplis après une sous-trame A-MPDU.

13. Procédé selon l'une quelconque des revendications 8 à 12, dans lequel la partie de bit de queue comprend 6 bits, et la valeur des 6 bits est 000000.

14. Procédé selon une quelconque des revendications 8 à 13, dans lequel la seconde sous-trame A-MPDU est portée dans la seconde unité de données de protocole physique, PPDU, la seconde PPDU comprend le préambule physique, et le préambule physique comprend également, un ou plusieurs des éléments suivants :
une indication de retransmission, utilisée pour indiquer si la seconde PPDU comprend une MPDU retransmise, dans lequel si l'indication de retransmission est réglée à une première valeur, la première valeur est utilisée pour indiquer que la PPDU comprend une MPDU retransmise ; et
une indication de longueur de retransmission, utilisée pour indiquer une longueur totale des N sous-trames A-MPDU comprises dans la seconde PPDU.

15. Appareil d'envoi (1600), appliqué à une extrémité de transmission, comprenant une mémoire (1604) et un processeur (1601), dans lequel la mémoire est couplée au processeur, la mémoire est configurée pour stocker un programme d'ordinateur, et le programme d'ordinateur comprend des instructions de programme ; et le processeur est configuré pour invoquer les instructions de programme pour mettre en œuvre le procédé selon l'une quelconque des revendications 1 à 7.
